# EUROPEAN PATENT APPLICATION

(11) **EP 4 847 990 A2**
(43) Date of publication of application: **02.12.2026**
(21) Application number: 26210916.8
(22) Date of filing: 15.10.2020
(51) Int. Cl.: G02F 1/15

(54) **CROSSLINKED GEL FORMULATION**

(62) Document number(s) of the earlier application(s) in accordance with Art. 76 EPC: 20306209.6 / 3 985 046
(71) Applicant: ESSILOR INTERNATIONAL, 94220 Charenton-Le-Pont (FR)
(72) Inventor: ARCHAMBEAU, Samuel, 94220 CHARENTON-LE-PONT (FR); BIVER, Claudine, 94220 CHARENTON-LE-PONT (FR); CANO, Jean-Paul, 94220 CHARENTON-LE-PONT (FR); MECA, Marion, 94220 CHARENTON-LE-PONT (FR); HARRIBEY, Marion, 94220 CHARENTON LE PONT (FR)
(74) Representative: Plasseraud IP

(57) **Abstract**

The invention relates to an electrochromic gel medium comprising at least one non-aqueous solvent, said solvent being present in the said gel medium in at least 30 % by weight relative to the total weight of the gel; a crosslinked polymer resulting from the reaction of a polyfunctional polymer containing at least two carboxyl moieties capable of undergoing crosslinking reactions, said polyfunctional polymer having a molecular weight from 2,000 g/mol to 3,000,000 g/mol, and a crosslinking agent chosen from a polycarbodiimide or a non-toxic polyaziridine; and a redox chemical mixture in solution in said solvent and interspersed in said crosslinked polymer, said mixture being constituted of at least one electrochromic reducing compound and at least one electrochromic oxidizing compound.

## Description

The present invention relates to a novel gel medium comprising: at least one non-aqueous solvent, a crosslinked polymer resulting from the reaction of a polyfunctional polymer containing at least two carboxyl moieties capable of undergoing crosslinking reactions and a crosslinking agent chosen from a polycarbodiimide or a non-toxic polyaziridine; such gel medium being suitable for manufacturing articles such as batteries or electrochromic devices or photochromic devices.

Electrochromism is a well-known physical phenomenon which is observed with certain classes of chemical compounds that change reversibly colour when a voltage is applied to them. The material undergoes reversible changes in optical properties by oxidation and reduction.

Electrochromic systems may be applied to various applications. For instance, in the ophthalmic field, electrochromic lenses may enable the user to actively control the darkening of the lens under some illumination conditions, so as to provide ocular protection, and commute rapidly when these conditions change, contrary to photochromic lenses which passively darken under UV radiation and furthermore require some time to bleach again when the UV radiation stops. Electrochromic glasses have also been used in the manufacture of "smart windows" or rear-view mirrors. Usually, electrochromic devices are made from an electrochromic composition comprising, besides electrochromic compounds, either a liquid electrolyte or a solid electrolyte.

Liquid electrolytes are usually introduced by surface capillarity in a previously assembled functional electrochromic cell of an electrochromic device, with for example two small openings placed in opposite corners when filling is done at atmospheric pressure. Once the liquid electrolyte is put in contact with one of the openings, it ascends through the internal cavity of the cell. However, as the ascent becomes more difficult as filling progresses, due to the growing potential energy of the electrolyte, this method limits the device size and increases the risk of bubbles. What is more, once introduced into an electrochromic device, the layer containing said liquid electrolyte may show low mechanical resistance to deformation. Conversely, assembling solid electrolytes with rigid electrode substrates is very difficult due to their non-deformability. This may limit the electronic contact between the electrode substrates and the electrochromic material, leading to colorless areas in the colored state, making it more noticeable in the case of large-area electrochromic devices. Furthermore, another drawback of solid electrolytes is low ionic conductivity, a slow or an uneven change in color.

Very similar difficulties can be also encountered in the case of photochromic systems either in liquid or solid state.

Passive photochromic devices are devices comprising photochromic dyes with an absorbance which depends solely on the presence or absence of UV light. Photochromic dyes are usually incorporated into ophthalmic lenses by an imbibition (or impregnation) or coating processes which is not suited for any ophthalmic substrate. Such dyes typically exhibit rapid activation (i.e. coloration) but several minutes, even tens of minutes, are generally necessary for the photochromic device to return to the inactive (i.e. colorless) state.

In case of optical lenses, this slow deactivation (i.e. discoloration) represents a problem for the user of photochromic spectacles as he finds himself obliged to remove them when he rapidly passes from a bright environment to a dark place. The same problem may also arise in case of other optical articles wherein the slow deactivation leads to a prolonged waiting time that is not satisfactory for the end user. The rate of deactivation of photochromic dyes depends not only on their chemical structure, but also, in a not insignificant fashion, on the matrix in which they are present. It has thus been possible to show that the discoloration of photochromic dyes is virtually always faster in a liquid medium than in a solid medium. However the use of a liquid medium has several drawbacks, such as the apparition of defects upon assembly within the end-article or low mechanical resistance to deformation.

It is necessary thus to obtain a strong cohesive medium to avoid deformation of the layer or composition containing the active dye, namely the deformation of the electrochromic layer or electrochromic composition within an electrochromic device upon handling it or of the photochromic layer or photochromic composition within a photochromic device upon handling it, while still ensuring a desirable ionic conductivity within the system comprising an active dye. This is particularly important in case of flexible and therefore deformable devices such as goggles, for instance ski goggles. Otherwise, optical defects, such as white defects or bubbles, may appear when the device is activated, which are considered unaesthetic to the user.

A similar need of providing an electrolyte system showing both a good ionic conductivity and resistance to deformation is also encountered in batteries. Indeed, all-solid electrolytes are usually low in their ionic conductivity so that they are hardly put into practical use for a battery.

The above-mentioned concerns are avoided when using gel or semisolid electrolytes, as they are easier to manipulate than liquid ones and provide better interaction with the electrode than solid ones (due to their stickiness and/or adhesion), thus opening new opportunities for the industrialization stage.

References to gel electrolytes or all-in-one gel based electrochromic devices are made in the scientific review All-in-One Gel-Based Electrochromic Devices: Strengths and Recent Developments (Alesanco Y. et al;. Materials (Basel). 2018;11(3):414. Published 2018 Mar 10*)* makes several.

Particularly, in the context of transparent materials adaptable to any surface (i.e. flexible) all-in-one gel-based electrochromic devices have been proven to meet the flexibility requirement due to two main strengths. First, their assembly process does not involve high-temperature steps, making them compatible with plastic electrode substrates (i.e., tin-doped indium oxide (ITO)/PET). Second, due to the higher viscosity and/or self-standing character of the gel in comparison to liquid electrochromic mixtures, they avoid the risk of leakage and provide more regular distribution (thickness) of the electrochromic mixture throughout the device area, ensuring better homogeneity and avoiding the short circuit between the electrode substrates more likely to occur in flexible, and therefore deformable, systems.

Among the possible ways of obtaining such gels, the authors mention UV photopolymerization or ionic crosslinking of polyvinyl alcohol with borax. This latter is carried out in water. The main drawback is that borax is not soluble in the usual non-aqueous solvents used in most of the electrochromic formulation, such as propylene carbonate, and therefore cannot be used.

Another drawback is that while UV photo polymerization is an effective way to obtain a gel, it requires the presence of photo initiator molecules to initiate polymerization. Such molecules may unwantedly interact with electrochromic dyes and lead to a degradation of the electrochromic properties.

Documents US 7,001,540, US 8,928,966 and US 6,057,956 are all related to a crosslinked electrochromic formulation. A cross-linked polymer is obtained between a preferred crosslinker having an isocyanate function or an isothiocyanate function, and the like and any of the pre-polymers having a hydroxyl (or any reactive group having an active hydrogen, such as thiol, hydroxyl, acetoacetyl, urea, melamine, urethane, etc.). For example, a wide array of polymers having hydroxyl groups are available, such as polyols containing reactive hydroxyl (OH) groups. Thus, said reactive hydroxyl groups can react with isocyanate (NCO) groups to form polyurethane. The obtained cross-linked polymer is then submitted to a thermo-curing process in order to obtain the final gel or cured at room temperature for a prolonged period of time.

The main drawback is the use of isocyanates, since the use of an isocyanate-based crosslinking agent is limited due to the high toxicity of its chemistry.

In case a concentrated polymer composition is exempt from a crosslinking agent, while a layer with a sufficient amount of polymer to achieve a solid state is obtained, the attempt to achieve good mechanical properties has failed. Thus, after bending the samples, over time one may observe the flow of the formulation from pinch zones. The layer does not maintain a homogeneous thickness even if the composition is highly viscous.

There is thus a need for obtaining improved gel in order to be used as transparent media for forming high quality articles, in particular high quality batteries or electrochromic devices or photochromic devices, wherein said gels are made of components of low toxicity, show flexibility upon bending and compatibility with the other components forming the articles without disturbing their properties while the preparation process of such gels may be carried out rather quickly at relatively low temperatures, preferably at temperatures of less than 150°C and within less than an hour.

After concluding extensive research, according to a first aspect, the present inventors provide a gel medium comprising:
- at least one non-aqueous solvent, said solvent being present in the said gel medium in at least 30 % by weight relative to the total weight of the gel, even more preferably in at least 50 % by weight relative to the total weight of the gel;
- a crosslinked polymer resulting from the reaction of :
   - a polyfunctional polymer containing at least two carboxyl moieties capable of undergoing crosslinking reactions, said polyfunctional polymer having a molecular weight from 2,000 g/mol to 3,000,000 g/mol, preferably from 10,000 to 1,000,000 g/mol, more preferably from 25,000 g/mol to 400,000 g/mol and
   - a crosslinking agent chosen from a polycarbodiimide or a non-toxic polyaziridine.

Preferably, said polyfunctional polymer has an acid value from 1 to 50 mg KOH/g, preferably from 3 to 40 mg KOH/g, preferably from 4 to 15 mg KOH/g.

The gel medium is particularly useful as an electrolyte for articles such as batteries or electrochromic devices or photochromic devices.

According to one embodiment the gel medium further comprises one dye or a mixture of dyes, said dyes being preferably independently selected from photochromic dyes, electrochromic dyes, dichroic dyes and fixed tint dye, more preferably selected from photochromic dyes and electrochromic dyes.

Another object of the present invention is a device comprising the gel medium as defined in the first aspect, wherein said gel medium is formed by the following steps:
(a) forming a liquid composition by mixing outside of said device:
   - said at least one non-aqueous solvent;
   - said at least one optional dye, said optional dye being preferably selected from at least one photochromic dye or at least one electrochromic dye;
   - said polyfunctional polymer containing at least two carboxyl moieties capable of undergoing crosslinking reactions, a molecular weight from 2,000 g/mol to 3,000,000 g/mol, preferably from 10,000 to 1,000,000 g/mol, more preferably from 25,000 g/mol to 400,000 g/mol and
   - said crosslinking agent chosen from a polycarbodiimide or a non-toxic polyaziridine;
(b) inserting the liquid composition of step (a) into said device and allowing to polymerize said polyfunctional polymer and said polycarbodiimide or polyaziridine thereby forming a crosslinked polymer and forming a gel medium in which the compounds and the solvent are held in a matrix comprising the crosslinked polymer.

Preferably, said polyfunctional polymer has an acid value from 1 to 50 mg KOH/g, preferably from 3 to 40 mg KOH/g, preferably from 4 to 15 mg KOH/g.

Said device is for instance a battery or an electrochromic device or a photochromic device; preferably the device is an electrochromic device or a photochromic device and is selected from optical articles such as optical lenses, optical filters, attenuators, windows, visors, mirrors (such as rearview mirrors) and displays, preferably optical lenses, more preferably ophthalmic lenses or optical lenses for goggles.

Another object of the present invention relates to the use of a mixture of:
- a polyfunctional polymer containing at least two carboxyl moieties capable of undergoing crosslinking reactions, a molecular weight from 10,000 g/mol to 3,000,000 g/mol, preferably from 30,000 to 1,000,000 g/mol, more preferably from 50,000 g/mol to 400,000 g/mol and
- a crosslinking agent chosen from a polycarbodiimide or a non-toxic polyaziridine for the preparation *in situ* of the gel medium serving as an electrolyte within a device in order to obtain a strong cohesive medium so that deformation of said medium is limited or strongly reduced upon deformation of said device.

Preferably, said polyfunctional polymer has an acid value from 1 to 50 mg KOH/g, preferably from 3 to 40 mg KOH/g, preferably from 4 to 15 mg KOH/g.

### THE GEL MEDIUM:

As used herein "gel" means a semi-solid that can have properties ranging from soft and weak to hard and tough. Said gel is defined as a substantially dilute cross-linked system, or polymer which exhibits no flow when in the steady-state.

The gel of the present invention has the advantage of having mechanical strength, in other words, of being self-supporting.

The gel of the present invention is not a hydrogel (i.e not a gel in which the swelling agent is water). In other words, the gel does not comprise water. It is devoid of water.

The gel medium comprises a non-aqueous solvent, preferably said solvent being present in the said gel medium in at least 30 % by weight relative to the total weight of the gel, even more preferably in at least 50 % by weight relative to the total weight of the gel.

The gel comprises a cross linked polymer resulting from the reaction of a polyfunctional polymer containing at least two carboxyl moieties and a crosslinking agent.

### The cross-linked polymer:

### The polyfunctional polymer containing at least two carboxyl moieties

Chemical crosslinking is the process of linking polymer chains by covalent bondings, forming tridimensional networks which reduce the mobility of the structure.

The polyfunctional polymer containing at least two carboxyl moieties useful for the present invention contain two or more functional or reactive groups.

As used herein, the term "polymer" means homopolymers (e.g., prepared from a single monomer species), copolymers (e.g., prepared from at least two monomer species), and graft polymers.

The polyfunctional polymer containing at least two carboxyl moieties can take any number of a variety of structures or geometries, such as "branched," "linear," "forked," "multi branched," or "multi-arm", "dendrimer", "comb" and the like.

"Branched," in reference to the geometry or overall structure of a polymer, refers to a polymer having two or more polymer "arms" extending from a branch point. A branched polymer may possess two polymer arms, three polymer arms, four polymer arms, six polymer arms, eight polymer arms or more. A subset of branched polymers is multi-armed polymers, that is to say, polymers having three or more arms extending from a central core.

Without wishing to be bound by theory, it is believed that the absence of sterical hindrance among the arms of the multi-armed polymer enables efficient crosslinking with the crosslinking agent. Accordingly, it is preferable that the arms of the multi-armed polymers are spaced enough in order to avoid steric hindrance of carboxyl moieties situated within said arms.

The term "dendrimer" is intended to include, but is not limited to, a molecular architecture with an interior core and layers (or generations) of repeating units which are attached to and extend from this interior core, each layer having one or more branching points, and an exterior surface of terminal groups attached to the outermost generation. Dendrimers have regular dendrimeric or "starburst" molecular structures.

A "branch point" refers to a bifurcation point comprising one or more atoms at which a polymer or linking group splits or branches from a linear structure into one or more additional polymer arms. As used herein, the term "functional group" or any synonym thereof is meant to encompass protected forms thereof as well as unprotected forms.

A functional group in "protected form" refers to a functional group bearing a protecting group. As used herein, the term "functional group" or any synonym thereof is meant to encompass protected forms thereof.

Terms such as "multi-functional" or "polyfunctional" when defining a polymer denote polymers having at least 2 functional groups contained therein, where the functional groups may be the same or different.

The polyfunctional polymer useful for the present application may have along with the at least two carboxyl moieties capable of undergoing crosslinking reactions, at least one additional reactive group including, but not limited to, allyl, vinyl, (meth)acrylate, thiol, hydroxyl, isocyanate, epoxy, episulfide, amine, silane, and/or imine, or any combination thereof.

With some embodiments, and for purposes of non-limiting illustration, said polyfunctional polymer, along with the at least two carboxyl moieties capable of undergoing crosslinking reactions, may have a (meth)acrylate group and at least an additional group of allyl, vinyl, epoxy, silane or any combination thereof.

Said polyfunctional polymer containing at least two carboxyl moieties has a molecular weight from 2,000 g/mol to 3,000,000 g/mol, preferably from 10,000 to 1,000,000 g/mol, more preferably from 25,000 g/mol to 400,000 g/mol.

As used herein, molecular weight values of polymers, such as weight average molecular weights (Mw) and number average molecular weights (Mn), are determined by gel permeation chromatography in the presence of a suitable eluent (such as tetrahydrofuran), and using appropriate standards, such as polystyrene standards. In some instances, and where noted, nuclear magnetic resonance (NMR) spectroscopy (such as 1H NMR) is used to determine Mn values.

Preferably, said polyfunctional polymer containing at least two carboxyl moieties has an acid value from 1 to 50 mg KOH/g, preferably from 3 to 40 mg KOH/g, preferably from 4 to 15 mg KOH/g.

Unless otherwise indicated, all ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, such as but not limited to 1 to 6.1, 3.5 to 7.8, and 5.5 to 10.

As used herein, the term "acid value "is defined as the mass of potassium hydroxide (KOH, in mg) required to neutralize 1 g of polycondensate and is measured by direct titration using a standard ethanolic potassium hydroxide solution.

As used herein, and unless otherwise explicitly stated, the term "acid equivalent weight", such as with regard to polyfunctional polymer containing at least two carboxyl moieties means "carboxylic acid equivalent weight" and is determined for example by determining the molecular weight or average molecular weight and the average number of carboxylic acid groups per molecule, such as by NMR analysis, and calculating the acid equivalent weight by dividing the molecular weight by the number of carboxylic acid groups per molecule.

The polyfunctional polymer containing at least two carboxyl moieties useful for the present invention can be chosen from carboxylic acids functional polyester, carboxylic acids functional polyether, carboxylic acids functional polyurethane, carboxylic acids functional polyacrylate, carboxylic acids functional polymethacrylate, carboxylic acids functional polyvinylacetate copolymer, combinations thereof or a reaction products or copolymers thereof.

The polyfunctional polymers can be selected or prepared in accordance with art-recognized methods.

With some embodiments, and for purposes of non-limiting illustration, the carboxylic acid functional polyesters from which the carboxylic acid functional polymer (or polyfunctional polymer) can be selected are prepared by reacting carboxylic acid functional materials (and/or cyclic anhydrides thereof, and/or esters thereof) having carboxylic acid functionalities (or effective carboxylic acid functionalities, such as in the case of cyclic anhydrides and carboxylic acid esters) of at least 2, and polyols having hydroxy functionalities of at least 2. The molar equivalents ratio of carboxylic acid groups to hydroxy groups of the reactants is selected such that the resulting polyester has carboxylic acid functionality, and a desired molecular weight.

Examples of multifunctional carboxylic acids useful in preparing carboxylic acid functional polyesters, from which the carboxylic acid functional material of the curable photochromic compositions of the present invention, can be selected include, but are not limited to, benzene-1,2,4-tricarboxylic acid, phthalic acid, tetrahydrophthalic acid, hexahydrophthalic acid, endobicyclo-2,2,1,5-heptyne-2,3-dicarboxylic acid, tetrachlorophthalic acid, cyclohexanedioic acid, succinic acid, isophthalic acid, terephthalic acid, azelaic acid, maleic acid, trimesic acid, 3,6-dichlorophthalic acid, adipic acid, sebacic acid, and like multifunctional carboxylic acids (optionally including appropriate cyclic anhydrides thereof and/or esters thereof).

Examples of polyols that can be used to prepare the carboxylic acid functional polyesters, from which the carboxylic acid functional polymer of the curable photochromic compositions of the present invention, can be selected include, but are not limited to, glycerin, trimethylolpropane, trimethylolethane, trishydroxyethylisocyanurate, pentaerythritol, ethylene glycol, propylene glycol, trimethylene glycol, 1,3-, 1,2- and 1,4-butanediols, pentane diols (such as, but not limited to, 1,5-pentane diol), heptanediol, hexanediol (such as, but not limited to, 1,6-hexane diol), octanediol, 4,4'-(propane-2,2-diyl)dicyclohexanol, 4,4'-methylenedicyclohexanol, neopentyl glycol, 2,2,3-trimethylpentane-1,3-diol, 1,4-dimethylolcyclohexane, 2,2,4-trimethylpentane diol, 4,4'-(propane-2,2-diyl)diphenol, 4,4'-methylenediphenol, and like polyols.

With some embodiments, the carboxylic acid functional polyester is selected, includes or is a carboxylic acid functional oligomeric, or branched, or hyper-branched polyester that includes at least three terminal carboxylic acid groups. The carboxylic acid functional oligomeric, or branched, or hyper-branched polyester can be prepared in accordance with art-recognized methods, such as from the reaction of a polyol having at least three hydroxyl groups and a cyclic carboxylic acid ester, which, with some embodiments, involves the formation of a hydroxyl functional polyester intermediate, which is then modified to include carboxylic acid groups. Examples of polyols from which the carboxylic acid functional oligomeric, or branched, or hyper-branched polyester can be prepared include, but are not limited to, glycerol, trimethylolethane, trimethylolpropane, pentaerythritol, diglycerol (such as α,α'-diglycerol), di(trimethylolethane), di(trimethylolpropane), di(pentaerythritol), and combinations of two or more thereof. Examples of cyclic carboxylic acid esters from which the carboxylic acid functional oligomeric, or branched, or hyper-branched polyester can be prepared include, but are not limited to, lactones having from 4 to 8 atoms in the cyclic ring with the ester oxygen and the carbonyl carbon bonded directly to each other, such as beta-propiolactone, gamma-butyrolactone, delta-valerolactone, epsilon-caprolactone, and combinations of two or more thereof.

In accordance with some embodiments, when preparation of the carboxylic acid functional oligomeric, or branched, or hyper-branched polyester involves the formation of a hydroxyl functional polyester intermediate, the hydroxyl functional polyester intermediate can be modified to include carboxylic acid functionality by reaction with a cyclic anhydride, such as, but not limited to succinic anhydride.

Commercially available examples of polyols that can be used in the preparation of carboxylic acid functional polyesters of the compositions of the present invention include, but are not limited to, the following. Linear aliphatic polyester polyols include, but are not limited to, STEPANOL PC polyester polyols, which are commercially available from Stepan Company. The following polyols are commercially available from DIC Corporation: OD-X-286, OD-X-102, OD-X-355, OD-X-2330, OD-X-240, OD-X-668, OD-X-21068, OD-X-2547, OD-X-2420, OD-X-2523, OD-X-2555, and OD-X-2560 polyester polyols; OD-X-2155 and OD-X-640 polycaprolactone diols; and OD-X-2586 triol. The following polyols are commercially available from MilliporeSigma: a polycaprolactone polyol having CAS Number 36890-68-3; a triol having CAS Number 37625-56-2. The following polyols are commercially available from TriiSO: PERSTORP BOLTORN H2004 hyper-branched polyester polyols; and INGEVITY CAPA polycaprolactone polyols.

With some embodiments, and for purposes of non-limiting illustration, the carboxylic acid functional polyethers are prepared by first preparing a polyether intermediate having hydroxyl functionality, and then modifying the polyether intermediate to include carboxylic acid groups.

With some embodiments, and for the purposes of non-limiting illustration, the polyether intermediate can be prepared, by ring-opening polymerization of cyclic ethers or mixtures of cyclic ethers including, but not limited to, alkylene oxides and/or tetrahydrofuran, using acid or base catalysts with a polyhydric initiator or a mixture of polyhydric initiators. Non-limiting examples of polyhydric initiators include polyols recited previously herein. Illustrative alkylene oxides include ethylene oxide, propylene oxide, butylene oxide, amylene oxides, styrene oxide, and halogenated alkylene oxides such as trichlorobutylene oxide. Examples of polyether polyols, include, but are not limited to, poly(tetrahydrofuran)diols, which are also known as poly(tetramethylene ether) glycols.

With some embodiments, and for purposes of non-limiting illustration, the carboxylic acid functional polyurethanes are prepared by first forming a polyurethane intermediate having hydroxyl functionality or isocyanate functionality, and then modifying the polyurethane intermediate to include carboxylic acid groups. The polyurethane intermediate can be prepared in accordance with art-recognized methods, such as, but not limited to, the reaction of polyols, such as diols, with polyisocyanates, such as di-isocyanates. The polyols and polyisocyanates that can be used to prepare the polyurethane intermediate can, with some embodiments, be selected from those classes and examples of polyols and polyisocyanates recited previously herein.

Hydroxyl functional polyurethane intermediates can be modified to include carboxylic acid functionality in accordance with art-recognized methods. With some embodiments, the hydroxyl functional polyurethane intermediate is reacted with a cyclic anhydride, such as, but not limited to, succinic anhydride, which results in the formation of a carboxylic acid functional polyurethane. With some further embodiments, the hydroxyl functional polyurethane intermediate is reacted with an isocyanate functional carboxylic acid ester, such as but not limited to, an alkyl 3-isocyanatopropanoate, followed by art-recognized work up procedures, which results in the formation of a carboxylic acid functional polyurethane. Isocyanate functional polyurethane intermediates can be modified to include carboxylic acid functionality in accordance with art-recognized methods. With some embodiments, the isocyanate functional polyurethane intermediate is reacted with hydroxyl functional carboxylic acid ester, such as, but not limited to, a suitable carboxylic acid ester of 3-hydroxypropionic acid, which results in the formation of a carboxylic acid ester functional polyurethane. The carboxylic acid ester functional polyurethane is, with some embodiments, subjected to art-recognized work up procedures to convert it to a carboxylic acid functional polyurethane.

With some embodiments, and for purposes of non-limiting illustration, said polyfunctional polymer may be chosen from a copolymer prepared from (meth)acrylic acid monomer or C1-C4 substituted (meth)acrylic acid monomer and at least one ethylenically unsaturated organic carboxylic monomer containing 3 to 9 carbon atoms and at least one carboxylic group, such as poly(acrylic acid-co-maleic acid), poly (acrylic acid-co-fumaric acid), poly(acrylic acid-co-crotonic acid).

As used herein, the term "(meth)acrylate" and similar terms, such as "(meth)acrylic acid ester", means methacrylates and/or acrylates. As used herein, the term "(meth)acrylic acid" means methacrylic acid and/or acrylic acid.

Examples of such ethylenically unsaturated organic carboxylic monomer include, but are not limited to succinic acid or a substitute thereof; 3-butenoic acid; 6-heptenoic acid; 6-methyl 6-heptenoic acid; 2-methyl 6-heptenoic acid; 3-methyl 6-heptenoic acid; 3-ethyl 6-heptenoic acid; 5-methyl 6-heptenoic acid; 4-methyl 6-heptenoic acid; 6-octenoic acid; 2-propyl 6-heptenoic acid; and 2,4-dimethyl 6-heptenoic acid; and combinations of two or more thereof.

Examples of such commercially available copolymers that can be used with the gel medium of the present invention include, but are not limited to poly(acrylic acid-co-maleic acid) by Sigma Aldrich or Carbosynth.

Said polyfunctional polymer may be chosen from a copolymer prepared from (meth)acrylic acid monomer or C1-C4 substituted (meth)acrylic acid monomer and at least one C1-C12 alkyl(meth)acrylate monomer such as poly(methyl methacrylate/methacrylic acid).

The term "alkyl" represents any monovalent radical of a linear or branched hydrocarbon chain comprising 1 to 12 carbon atoms. Examples of C1-C12 alkyl groups include C1-C4 alkyl groups such as methyl, ethyl, n-propyl, i-propyl, n-butyl, i-butyl, s-butyl or t-butyl, C6-C8 alkyl groups such as n-hexyl, n-heptyl or n-octyl, as well as n-pentyl, 2-ethylhexyl, 3,5,5-trimethylhexyl, n-nonyl, n-decyl, n-undecyl, n-dodecyl or n-octadecyl.

Examples of C1-C12 alkyl(meth)acrylate monomer include, but are not limited to, methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate and 2-ethylhexyl (meth)acrylate and combinations of two or more thereof.

Examples of such commercially available copolymers that can be used with the gel medium of the present invention include but are not limited to poly(methyl methacrylate/methacrylic acid) by Sigma Aldrich or Polysciences.

Said polyfunctional polymer may be chosen from a copolymer prepared from (meth)acrylic acid monomer or C1-C4 substituted (meth)acrylic acid monomer and at least one ethylenically unsaturated C1-C12 alkene.

The term "alkene" represents any unsaturated hydrocarbon linear or branched hydrocarbon chain comprising 1 to 12 carbon atoms that contains a carbon-carbon double bond.

Examples of ethylenically unsaturated C1-C12 alkene include but are not limited to: 1-octene; 1-undecene; 1-octadecene; 5-methyl 1-heptene and combinations of two or more thereof.

Said polyfunctional polymer may be chosen from a copolymer prepared from (meth)acrylic acid monomer or C1-C4 substituted (meth)acrylic acid monomer and at least one aromatic mono-alkenyl monomer such as styrene.

Said polyfunctional polymer may be chosen from a copolymer prepared from vinyl acetate monomer and at least one ethylenically unsaturated organic carboxylic monomer containing 3 to 9 carbon atoms and at least one carboxylic group, such as copolymer of vinyl acetate and fumaric acid, copolymer of vinyl acetate and crotonic acid, copolymer of vinyl acetate and maleic acid.

Examples of such ethylenically unsaturated organic carboxylic monomers include, but are not limited to succinic acid or a substitute thereof; 3-butenoic acid; 6-heptenoic acid; 6-methyl 6-heptenoic acid; 2-methyl 6-heptenoic acid; 3-methyl 6-heptenoic acid; 3-ethyl 6-heptenoic acid; 5-methyl 6-heptenoic acid; 4-methyl 6-heptenoic acid; 6-octenoic acid; 2-propyl 6-heptenoic acid; and 2,4-dimethyl 6-heptenoic acid; and combinations of two or more thereof.

Preferably, said copolymer comprises from 80 % to 99,95 % by weight of vinyl acetate monomer and from 0,05 % to 20 % by weight of at least one ethylenically unsaturated organic carboxylic monomer containing 3 to 9 carbon atoms and at least one carboxylic group.

More preferably, said copolymer comprises from 90 % to 99,95 % by weight of vinyl acetate monomer and from 0,05 % to 10 % by weight of at least one ethylenically unsaturated organic carboxylic monomer containing 3 to 9 carbon atoms and at least one carboxylic group.

Examples of such commercially available copolymers that can be used for the gel medium of the present invention include but are not limited to Vinnapas C grades from Wacker such as Vinnapas C501.

Said polyfunctional polymer may be chosen from a copolymer prepared from C₁-C₁₂ alkyl vinyl ether monomer and at least one ethylenically unsaturated organic carboxylic monomer containing 3 to 9 carbon atoms and at least one carboxylic group, such as poly(methyl vinyl ether-alt-maleic acid).

Examples of such ethylenically unsaturated organic carboxylic monomers include, but are not limited to succinic acid or a substitute thereof; 3-butenoic acid; 6-heptenoic acid; 6-methyl 6-heptenoic acid; 2-methyl 6-heptenoic acid; 3-methyl 6-heptenoic acid; 3-ethyl 6-heptenoic acid; 5-methyl 6-heptenoic acid; 4-methyl 6-heptenoic acid; 6-octenoic acid; 2-propyl 6-heptenoic acid; and 2,4-dimethyl 6-heptenoic acid; and combinations of two or more thereof.

Examples of C1-C12 alkyl vinyl ether monomers include, but are not limited to, methyl vinyl ether, ethyl methyl vinyl ether, propyl methyl vinyl ether, isopropyl methyl vinyl ether,, butyl methyl vinyl ether, isobutyl methyl vinyl ether, tert-butyl methyl vinyl ether and 2-ethylhexyl methyl vinyl ether and combinations of two or more thereof.

Said polyfunctional polymer may be chosen from a carboxydifunctional PEG or PPG derivative, such as PEG-dipropionic acid, PEG-di-Succinic acid, PEG-di-Glutaric acid, PEG Bis[2-(succinylamino)ethyl].

Examples of carboxydifunctional PEG or PPG derivatives may have the general structure: X-PEG-Y or X-PPG-Y, wherein X and Y may be the same of different and chosen from a residue comprising at least one carboxylic group and a further group chosen from a C1-C5 alkylene, a C1-C5 amide or a C1-C5 ester; for example:

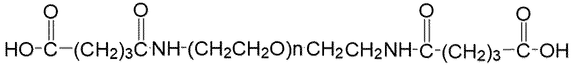

As used herein, the term "PEG" corresponds to polyethylene glycol.

As used herein, the term "PPG" corresponds to polypropylene glycol.

Examples of commercially available carboxydifunctional PEG or PPG derivatives that can be used with the gel medium of the present invention include, but are not limited to AA-PEG-AA (carboxyl methyl-PEG-carboxyl methyl) , GAA-PEG-GAA (with a C3 amide linkage between PEG and the carboxy COOH group), SA-PEG-SA (succinic acid-PEG-succinic acid) (), SAA-PEG-SAA (with a C2 amide linkage between PEG and the carboxy COOH group) sold by NanoSoft Polymers, PEG Diacid, (O,O'-Bis(2-carboxyethyl)dodecaethylene glycol (or PEG-dipropionic acid) by Polyure, Acetic Acid PEG8 Acetic Acid, Acetic Acid PEG12 Acetic Acid by Jenkem Technology, PEO Bis Carboxylic Acid by Specific Polymers.

Said polyfunctional polymer may be chosen from a multiarm PEG carboxylic acid terminated derivative, such as 4-arm PEG-carboxylic acid with a pentaerythritol core; 4-arm PEG-dicarboxylic acid-diol with a pentaerythritol core; a PEG Dendrimer carboxylic acid terminated of formula: 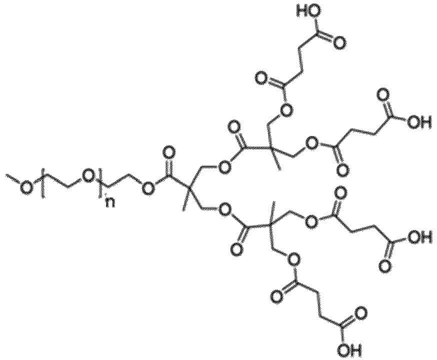 wherein n is an integer from 200-20000.

Another multiarm PEG carboxylic acid terminated derivative may have the following chemical structure: 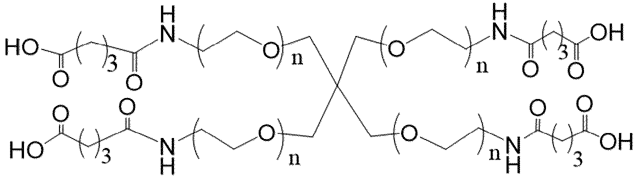 wherein n is an integer from 20-20000.

Examples of multiarm PEG carboxylic acid terminated derivatives may have a general structure:
✔ C-[CH₂-O-(PEG)-R³-COOH]₄, wherein R³ is chosen from a C1-C5 alkylene, a C1-C5 amide or a C1-C5 ester, such as 4-arm PEG-carboxylic acid with a pentaerythritol core;
✔ ₓ[OH-R³'-(PEG)-CH₂]-C-[CH₂-O-(PEG)-R³'-COOH]₄₋ₓ,
wherein x may be 1 or 2 and R³' is chosen from a C1-C5 alkylene, such as 4-arm PEG-dicarboxylic acid, diol with a pentaerythritol core. Examples of commercially available multiarm PEG carboxylic acid terminated derivatives that can be used with the gel medium of the present invention include, but are not limited to 4-arm-PEG-AA, 4-arm-PEG-GA, 4-arm-PEG-GAA, 4-arm-PEG-SA, 4-arm -PEG-SAA sold by NanoSoft Polymers, 4-arm-PEG 2-arm Hydroxyl, 2-arm-Acetic Acid by Jenkem Technology.

Said polyfunctional polymer may be chosen from a poly(lactide-co-glycolide) (PLGA) carboxylic acid terminated derivative, such as Poly(D,L-lactide-co-glycolide) end-capped with acid groups (PLGA-diacid).

The term "end-capped" is used herein as to refer to a terminal or endpoint of a polymer having an end-capping carboxylic moiety.

Examples of such commercially available derivatives that can be used for the gel medium of the present invention include but are not limited to PLGA DIACID sold by NanoSoft Polymers.

Said polyfunctional polymer may also be chosen from a multiarm PLGA carboxylic acid terminated derivative, such as 4-arm PLGA-carboxylic acid with a pentaerythritol core.

Examples of carboxydifunctional PEG or PPG derivatives may have the general structure: 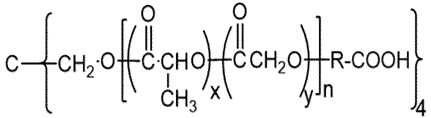
wherein n is an integer from 2-20000 and wherein x and y are integers equal or difference and raging from 1-150;
wherein R is chosen from a C1-C5 alkylene.

Examples of multiarm PLGA carboxylic acid terminated derivatives may have a general structure: C-[CH₂-O-(PLGA)-R⁶-COOH]₄, wherein R⁶ is chosen from a C1-C5 alkylene, a C1-C5 amide or a C1-C5 ester.

Examples of commercially available multiarm PLGA carboxylic acid terminated derivatives that can be used with the gel medium of the present invention include but are not limited to 4-arm PLGA-COOH sold by NanoSoft Polymers.

Said polyfunctional polymer may be chosen from a poly(ε-caprolactone)-PEG (PCL-PEG) carboxylic acid terminated derivative.

Said polyfunctional polymer may be chosen from a PLGA-PEG carboxylic acid terminated derivative.

Said polyfunctional polymer may be chosen from a PLA-PEG carboxylic acid terminated derivative.

Said polyfunctional polymer may be chosen from a PCL-PEG carboxylic acid terminated derivative.

Said polyfunctional polymer may be chosen from a polyester dendrimer with 2,2-bis(hydroxymethyl)propanoic acid (bis-MPA), trimethylol propane or pentaerythritol as a core, such as :

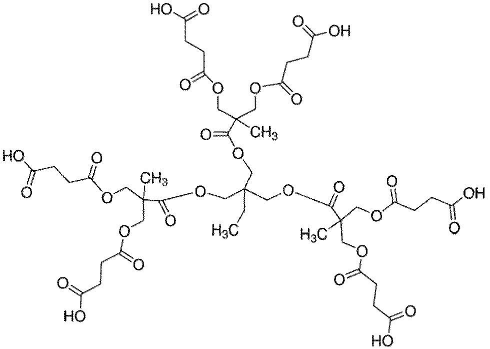

Examples of commercially available dendrimers that can be used for the gel medium of the present invention include but are not limited to Bis-MPA Carboxyl Dendrimer, Generation 1, TMP Core or Bis-MPA Carboxyl Dendrimer, Generation 2, TMP Core by Polymer Factory.

Said polyfunctional polymer may be chosen from a polyurethane matrix which contains at least two carboxylic moieties, said polyurethane matrix being obtained from the reaction of polyols with alkylene oxides isocyanate compounds.

Accordingly, either or both polyols, alkylene oxides isocyanate compounds further comprise at least one carboxylic moiety.

The polyurethane matrix can be prepared in accordance with art-recognized methods. The polyurethane can be prepared from the reaction of polyols, such as diols, with polyisocyanates, such as di-isocyanates.

Illustrative the alkylene oxides in the alkylene oxides isocyanate compounds include ethylene oxide, propylene oxide, butylene oxide and styrene oxide.

An example of a polyol that can be used to prepare the polyurethane matrix may be a 4-arm PEG end-capped with both a hydroxyl moiety and a carboxyl moiety, respectively.

Said polyfunctional polymer may be chosen from a mixture or a reaction product of the above-mentioned polyfunctional polymers.

Examples of copolymers of acrylates and methacrylates or styrene acrylates or styrene methacrylates, polymers or copolymers made from ionic liquids may also be employed. Such ionic liquid monomers developed by SOLVIONIC can easily be transformed into polymer either by thermal means or by UV-polymerisation. Examples thereof include but are not limited to 1,4-Butanediyl-3,3'-bis-1-vinylimidazolium Di-bis(trifluoromethanesulfonyl)imide or 3-Ethyl-1-vinylimidazolium bis(fluorosulfonyl)imide.

### The crosslinking agent:

A crosslinked agent is used for the manufacturing of the gel of the present invention.

In case no crosslinking agent is used, while a layer with a sufficient amount of polymer to achieve a solid state is obtained, no good mechanical properties can be reached. Thus, after bending the samples, over time one may observe the flow of the formulation from pinch zones.

The crosslinking agent useful for the present invention can be a polycarbodiimide.

Polycarbodiimides selectively react with carboxylic acid (-COOH) groups of the polyfunctional (or multifunctional) polymer. This type of crosslinking reaction results in a classic 3D polymer-crosslinker network.

The polycarbodiimides useful for the present invention include at least two carbodiimide groups, such as at least three carbodiimide groups, or at least four carbodiimide groups.

A schematic diagram for the synthesis route of the obtained crosslinked polymer containing said polycarbodiimide is shown herein. After the formation of an unstable intermediate a stable N-acylurea is formed as shown herein. Since the polycarbodiimide contains several - N=C=N- groups, one polycarbodiimide molecule can react with carboxylic acid residues on different polymer chains tying them together forming a three-dimensional network. Reaction of carboxylic acid with carbodiimide can be quite fast under ambient or mild thermal curing conditions (Derksen, André. (2017). Polycarbodiimides as classification-free and easy to use crosslinkers for water-based coatings. Pci Journal).

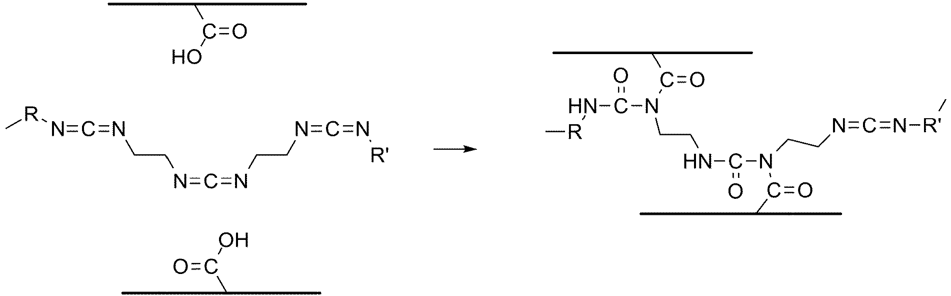

With some embodiments of the present invention, the crosslinking agent from which the crosslinked polymer of the gel medium is prepared is a polycarbodiimide that may be obtained by a reaction that includes condensation of polyfunctional isocyanates, in which each polyfunctional isocyanate is selected from the group consisting of aliphatic polyfunctional isocyanates, cycloaliphatic polyfunctional isocyanates, heterocycloaliphatic polyfunctional isocyanates, aryl polyfunctional isocyanates, arylaliphatic polyfunctional isocyanates, and combinations of two or more thereof.

As used herein, the term "polyfunctional isocyanate" means a material having at least two isocyanate groups. The polyfunctional isocyanates used to form the polycarbodiimides may have from 2 to 10 isocyanate groups, or from 2 to 8 isocyanate groups, or from 2 to 6 isocyanate groups, or 2 to 5 isocyanate groups, or 2 or 3 isocyanate groups, in each case inclusive of the recited values.

Preferably, the obtained polycarbodiimide contains no free isocyanate functions.

In another embodiment, the polycarbodiimide is chosen from an oligomeric material which comprises carbodiimide functions and hydrophilic segment groups having no reactivity towards the carbodiimide functions.

The oligomeric material which comprises carbodiimide functions is further substituted by at least an alkylalkoxysilane group or an alkoxysilane group; preferably it is further substituted trimethoxysilanes or triethoxysilane.

Examples of commercially available polycarbodiimide materials that can be used for the gel medium of the present invention include, but are not limited to PICASSIAN^{®} XL-701 , XL-702, XL-725, XL 721 and XL-732, EX-5558 from Stahl Holland; and STABAXOL P, STABAXOL P 100, and STABAXOL P 200 polycarbodiimides, which are commercially available from Rhein Chemie Staboxol, carbodiimide crosslinkers XL-1 V and CX-300^{®} from DSM Coating Resins; carbodiimide crosslinkers CARBODILITE^{®} V-02, V-04, E-02, and SV-02 CARBODILITE V-02B, CARBODILITE V-04K, CARBODILITE V-05, CARBODILITE E02, CARBODILITE E04, CARBODILITE V-02, CARBODILITE V-02-L2, CARBODILITE V-04, and CARBODILITE V-SV-06 from GSI Exim America, polycarbodiimides which are commercially available NISSHINBO INDUSTRIES, NK ASSIST CIR polycarbodiimide, which is commercially available from Nicca Chemical Co., Ltd ZOLDINE from ANGUS and carbodiimide crosslinker UCARLINK^{®} XL-29SE from Union Carbide Corporation. Preferably, the polycarbodiimide is used within its pure form or in a composition further comprising an organic solvent.

Importantly, this crosslinking agent is not harmful, irritant, nor toxic, as has been determined in toxicological studies.

Alternatively, the crosslinking agent from which the crosslinked polymer of the gel medium according to the invention is prepared is a non-toxic polyaziridine.

Document US9500888 mentions in a general way the use of aziridine as curable functional groups for gel electrolyte.

Examples of commercially available non-toxic polyaziridine materials that can be used for the gel medium of the present invention include but are not limited to NeoAdd^{™} PAX521 and NeoAdd^{™} PAX523 by DSM.

A schematic diagram for the synthesis route of the crosslinked obtained polymer containing said polyaziridine is shown herein. The reaction comprises a ring-opening step of electrophile aziridines with acid as the nucleophile.

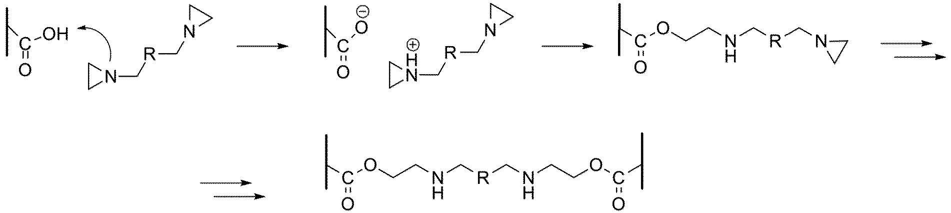

An alternative crosslinking agent is one combining the aziridine functionality with the carbodiimide functionality in one molecule, as described in document EP0507407.

The gel according to the present invention comprises advantageously an equivalents ratio of carbodiimide equivalents of the polycarbodiimide to carboxylic acid equivalents of said polyfunctional polymer from 0.1:1 to 10:1, preferably from 0.2:1 to 5:1.

### Dyes

The gel medium can further comprise at least one dye, being either passive (or permanent) dyes, active dyes or a mixture thereof, preferably selected from photochromic compounds (dichroic or not), dichroic compounds, electrochromic compounds, and fixed tint dyes, and a mixture thereof, more preferably being at least one photochromic compound or at least one electrochromic compound, preferably at least two electrochromic compounds.

Thus, the gel medium can comprise at least one dye or a mixture of dyes, said at least one dye being for example chosen from:
- an electrochromic compound (electrochromic dye) or a mixture of electrochromic dyes;
- a photochromic dye (dichroic or not) or a mixture of photochromic dyes;
- a dichroic compound or a mixture of dichroic compounds;
- a fixed tint dye, as described herein;
- and a mixture of any of the above.

In case a dichroic compound or a mixture of dichroic compounds is used, the solvent is preferably a mesogenic compound (liquid crystal phase).By liquid crystal phase, it is understood herein a phase in which the liquid crystals mesogen are ordered, by opposition to an isotropic phase in which the liquid crystals are in the isotropic state, the liquid crystal phase is typically one of a nematic phase and a smectic phase.

### Electrochromic dyes

When the gel medium of the present invention is an electrochromic gel medium, said gel can further comprise a redox chemical mixture in solution in the non-aqueous solvent and interspersed in the crosslinked polymer, said mixture being constituted of at least one reducing compound, preferably at least one electrochromic reducing compound and at least one electrochromic oxidizing compound, and which is in an activated condition in the presence of an applied voltage and which bleaches to an inactive condition in the absence of an applied voltage.

The at least one reducing compound of the solution of the present invention is not particularly limited. The at least one reducing compound is not necessarily an electrochromic compound; however, it should be chosen among compounds having at least the following properties: low absorption of visible light in the bleached state (if the reducing compound is also an electrochromic compound), good stability, in particular to oxygen, and good solubility in conventional electrochromic solvents such as propylene carbonate.

The electrochromic reducing compound can be selected from ferrocene and their derivatives such as ethyl ferrocene, t-butyl ferrocene, phenoxazine and their derivatives, such as N-benzylphenoxazine, phenazine and their derivatives, such as 5,10-dihydrophenazine, N,N,N',N'-tetramethyl-p-phenylenediamine, phenothiazine and their derivatives, such as 10-methylphenothiazine and isopropylphenothiazine; thioanthrene; thiophene and tetrathiafulvalene.

The at least one electrochromic oxidizing compound is not particularly limited. The at least one electrochromic oxidizing compound is selected from mono viologens or bis viologens (i.e 4,4'-bipyridinium salts or bis[4,4'-bipyridinium] salts) such alkylviologens, arylviologens, arylalkylviologens, alkylarylviologens, anthraquinones, benzazoles, imidazo[1,2-α]pyridines, 2,1,3-benzothiadiazoles, imidazoles, benzoselenadiazoles, benzoselenazoles and derivatives thereof.

Non limiting examples of such viologen compounds or viologen derivatives, more particularly examples of substituted dialkyl, diaryl 4,4'-bipyridinium salts, substituted dialkyl, diaryl bis[4,4'-bipyridinium] salts and mixtures thereof are described in documents EP2848667A1, EP2848668A1, EP2848669A1, EP2848670A1, EP3115433A1 and EP3345981A1 whose teachings are incorporated herein. Preferred examples are mentioned herein.

In one preferred embodiment, the redox chemical mixture comprises, at least one reducing compound, preferably one reducing compound (such as 10-methylphenothiazine) and at least one electrochromic oxidizing compound, preferably at least two electrochromic oxidizing compounds, for example two or three electrochromic oxidizing compounds, preferably each electrochromic oxidizing compound being independently selected from substituted dialkyl 4,4'-bipyridinium salts, substituted diaryl 4,4'-bipyridinium salts, substituted dialkyl bis[4,4'-bipyridinium] salts or substituted diaryl bis[4,4'-bipyridinium] salts, more preferably the at least two electrochromic oxidizing compounds being at least a substituted diaryl 4,4'-bipyridinium and at least a substituted diaryl bis[4,4'-bipyridinium].

Preferably, the at least one oxidizing compound is selected or the at least two electrochromic oxidizing compounds are independently selected from the series of the following compounds.

| Compound | Formula |
|---|---|
| I-1 | 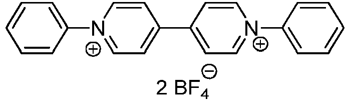 |
| I-2 | 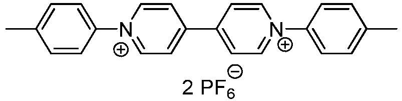 |
| I-3 | 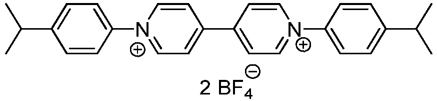 |
| I-4 | 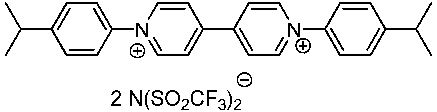 |
| I-5 | 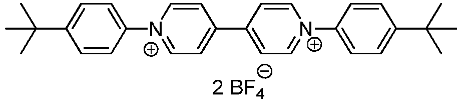 |
| I-6 | 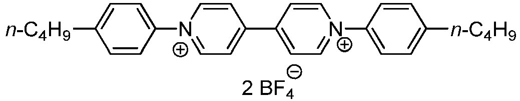 |
| I-7 | 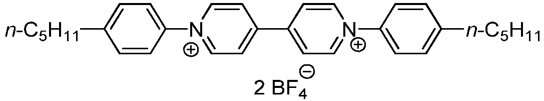 |
| I-8 | 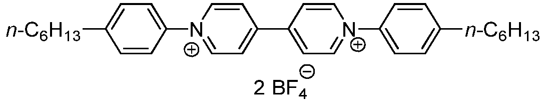 |
| I-9 | 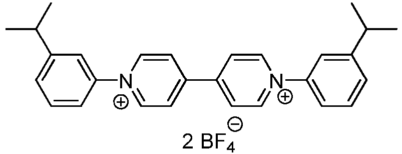 |
| I-10 | 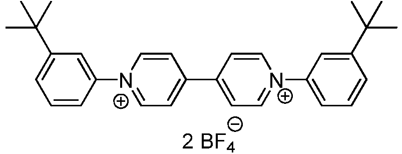 |
| I-11 | 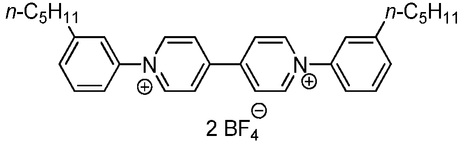 |
| I-12 | 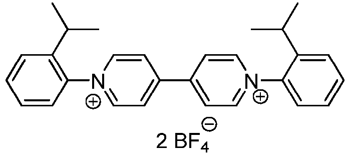 |
| I-13 | 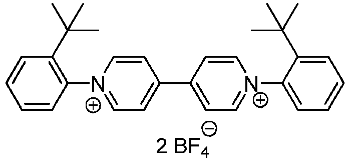 |
| I-14 | 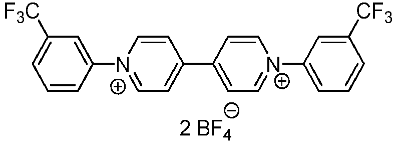 |
| I-15 | 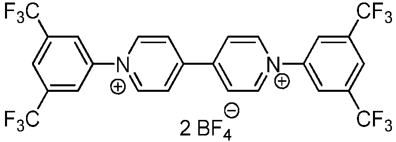 |
| I-16 | 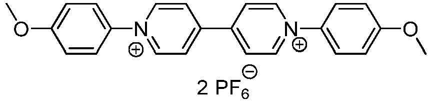 |
| I-17 | 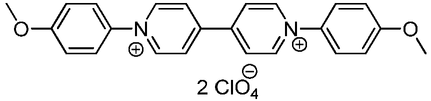 |
| I-18 | 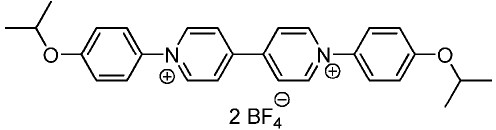 |
| I-19 | 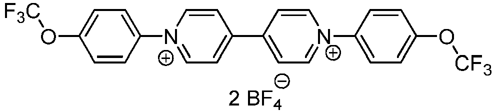 |
| I-20 | 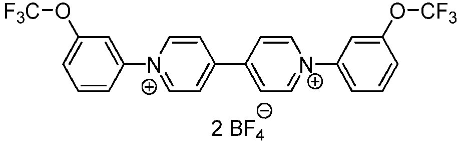 |
| I-21 | 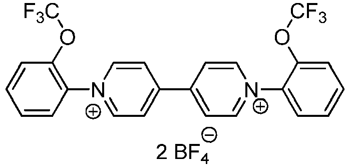 |
| I-22 | 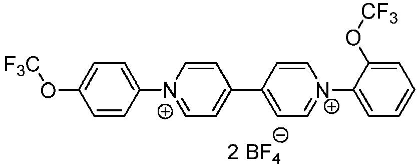 |
| I-23 | 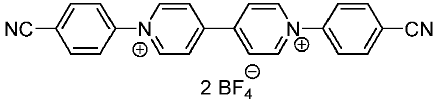 |
| I-24 | 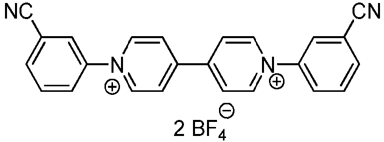 |
| I-25 | 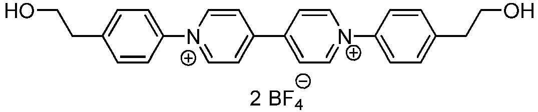 |
| I-26 | 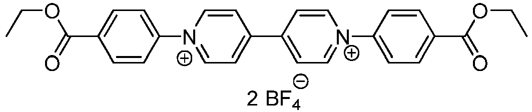 |
| I-27 | 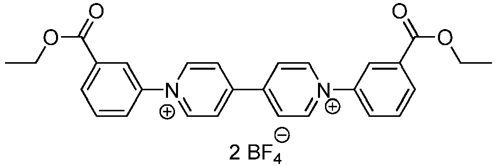 |
| I-28 | 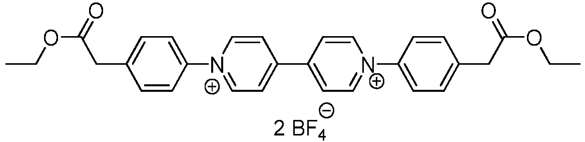 |
| I-29 | 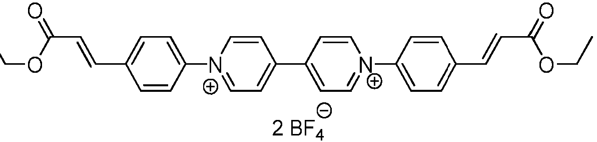 |
| I-30 | 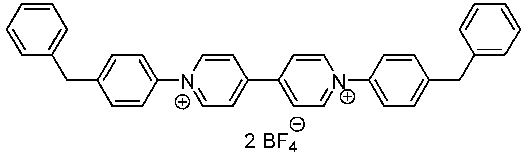 |
| I-31 | 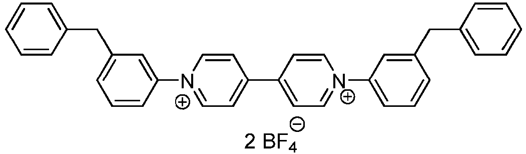 |
| I-32 | 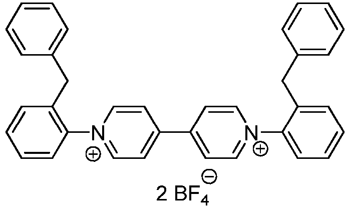 |
| I-33 | 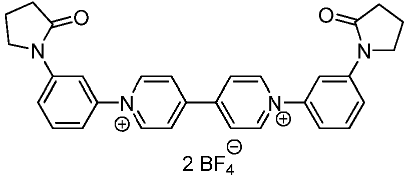 |
| I-34 | 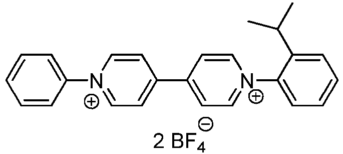 |
| I-35 | 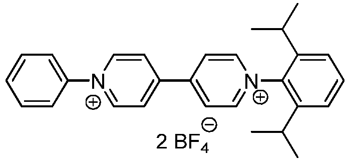 |
| I-36 | 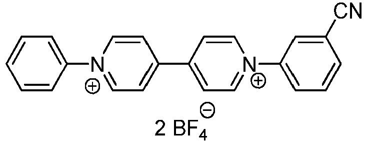 |
| I-37 | 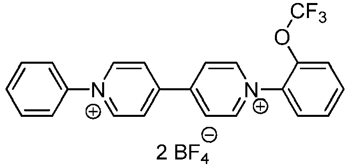 |
| I-38 | 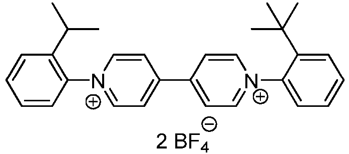 |
| I-39 | 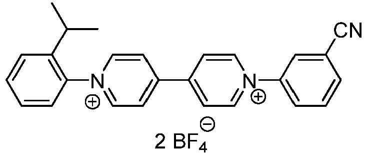 |
| I-40 | 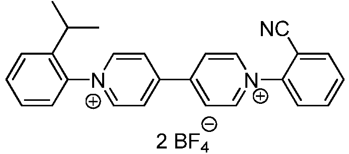 |
| I-41 | 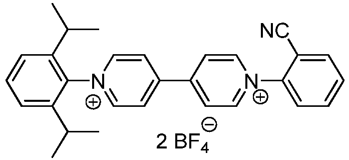 |
| I-42 | 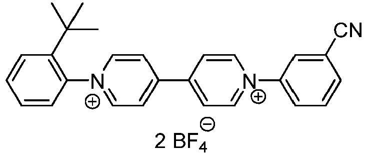 |
| I-43 | 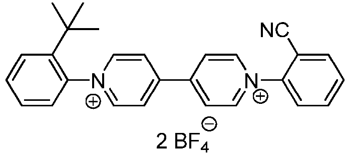 |
| I-44 | 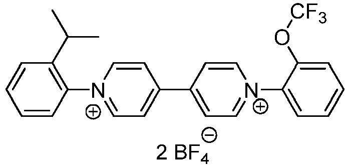 |
| I-45 | 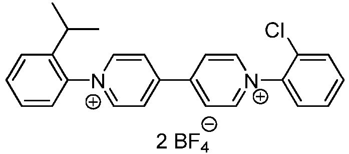 |
| I-46 | 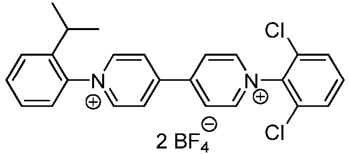 |
| I-47 | 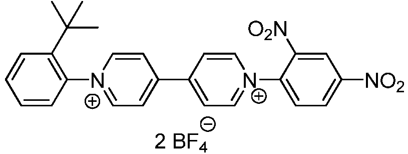 |
| I-48 | 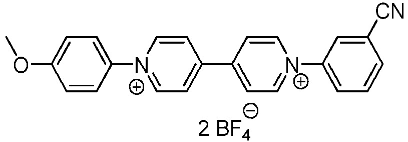 |
| I-49 | 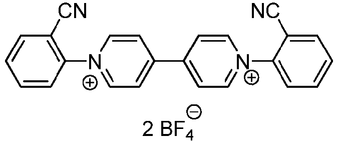 |
| I-50 | 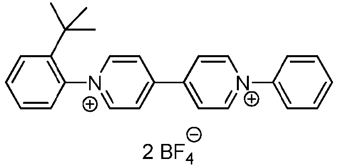 |
| II-1 | 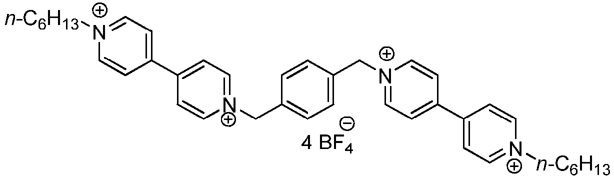 |
| II-2 | 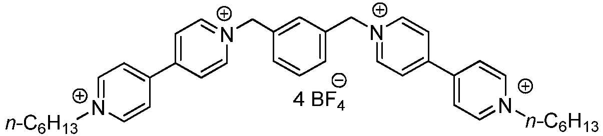 |
| II-3 | 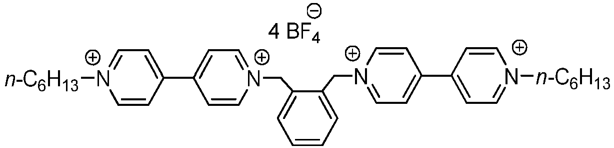 |
| II-4 | 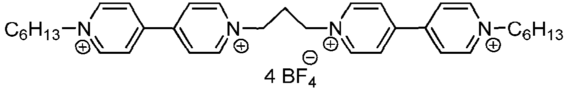 |
| II-5 | 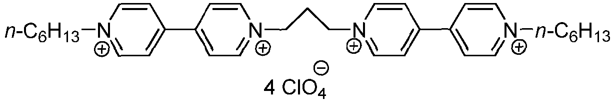 |
| II-6 | 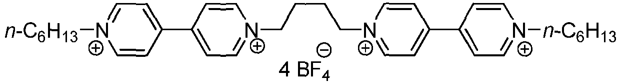 |
| II-7 | 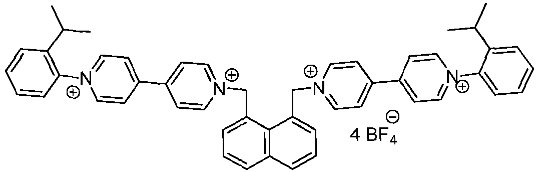 |
| II-8 | 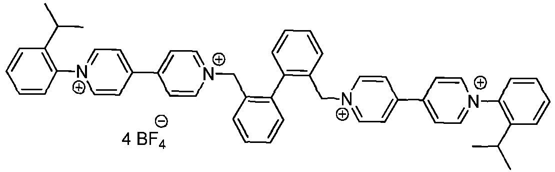 |
| II-9 | 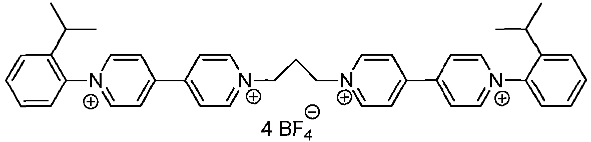 |
| II-10 | 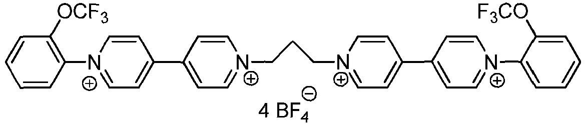 |
| II-11 | 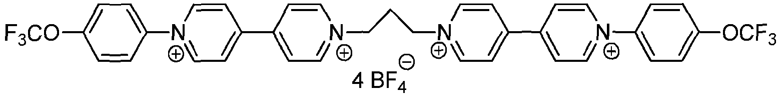 |
| II-12 | 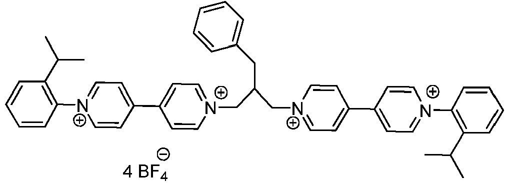 |
| II-13 | 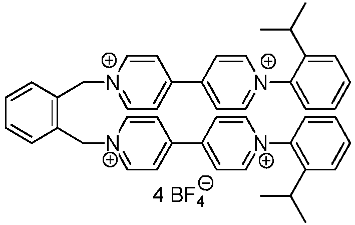 |
| II-14 | 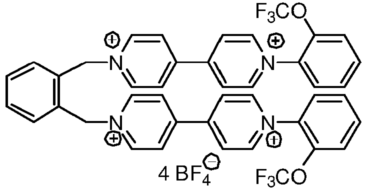 |
| II-15 | 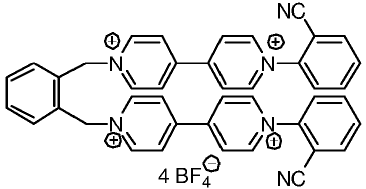 |
| II-16 | 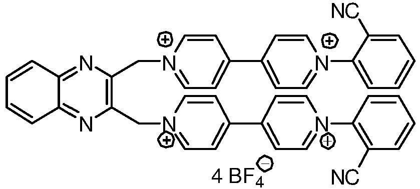 |
| II-17 | 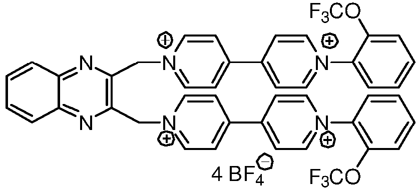 |
| II-18 | 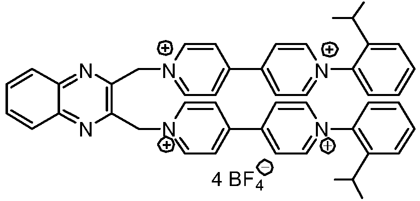 |
| III-1 | 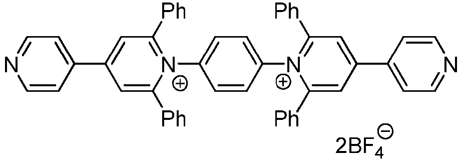 |
| III-2 | 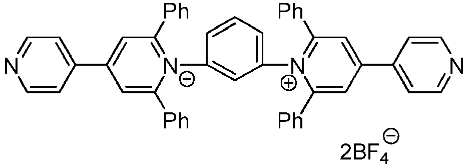 |
| III-3 | 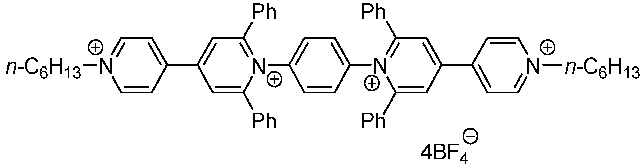 |
| III-4 | 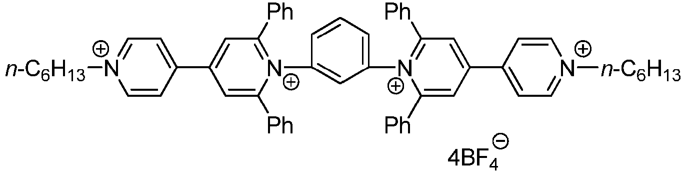 |
| III-5 | 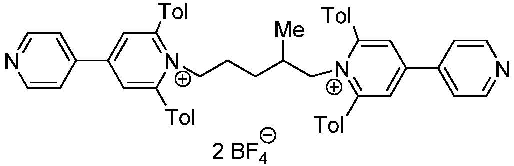 |
| III-6 | 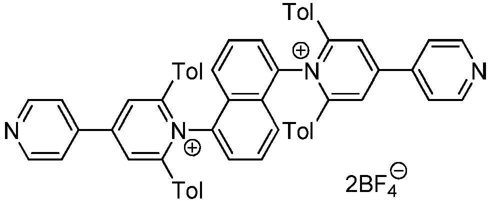 |
| III-7 | 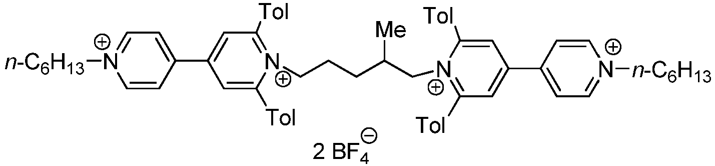 |
| III-8 | 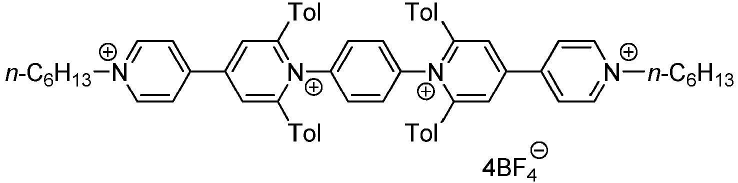 |
| III-9 | 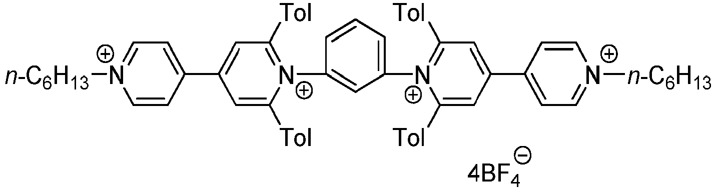 |
| III-10 | 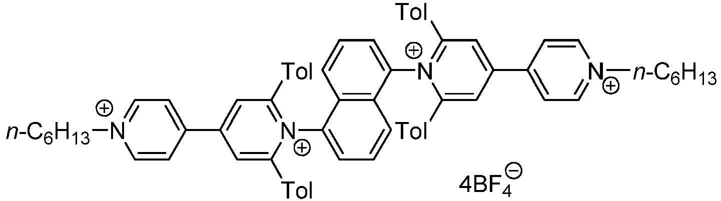 |
| III-11 | 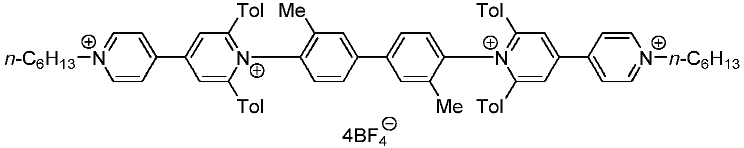 |
| III-12 | 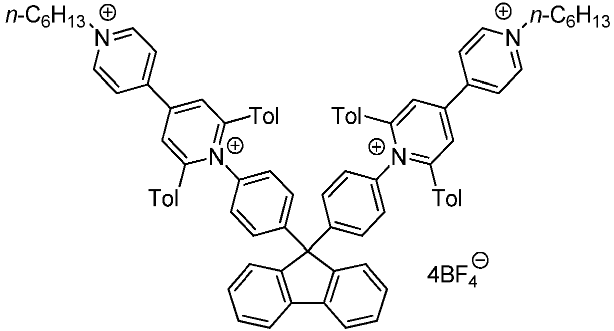 |
| III-13 | 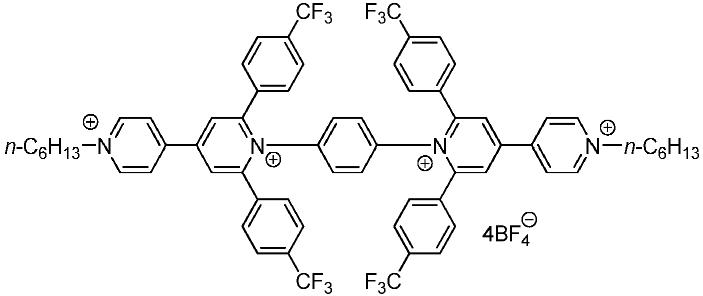 |
| III-14 | 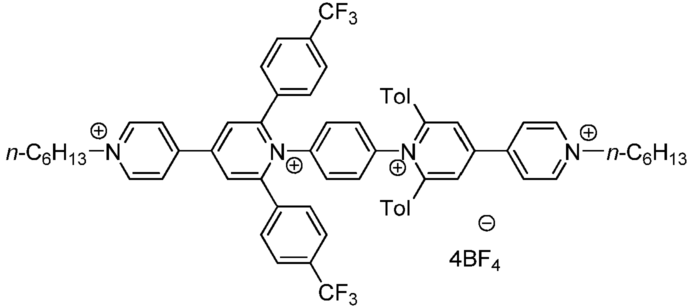 |

More preferably, the at least one electrochromic oxidizing compound is selected or the at least two electrochromic compounds are selected from the series of the following compounds.

| Compound | Formula |
|---|---|
| I-1 | 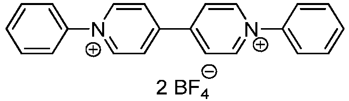 |
| I-2 | 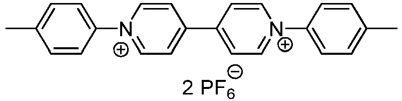 |
| I-3 | 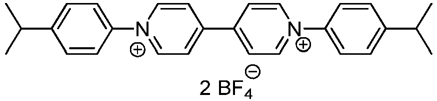 |
| I-4 | 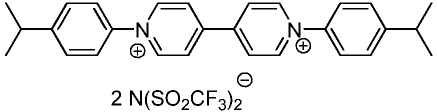 |
| I-5 | 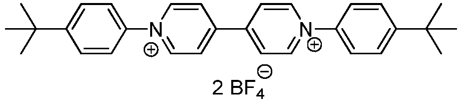 |
| I-6 | 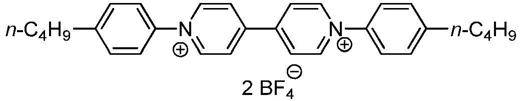 |
| I-7 | 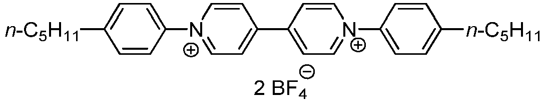 |
| I-8 | 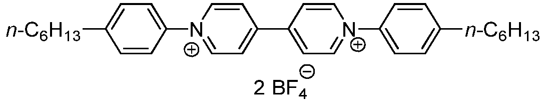 |
| I-9 | 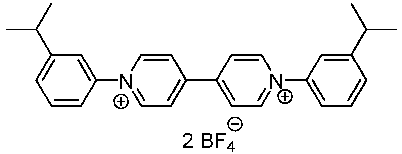 |
| I-10 | 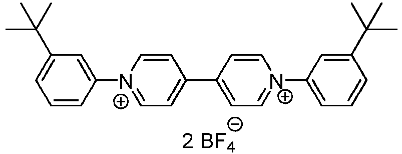 |
| I-11 | 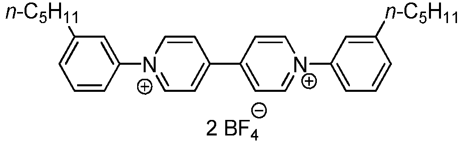 |
| I-12 | 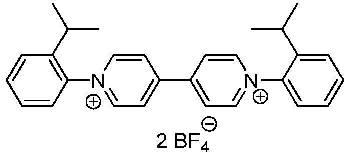 |
| I-13 | 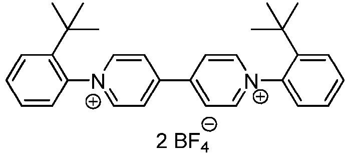 |
| I-14 | 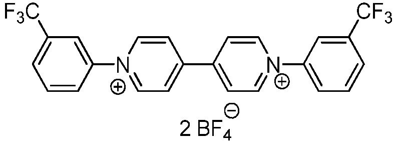 |
| I-16 | 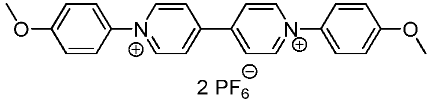 |
| I-17 | 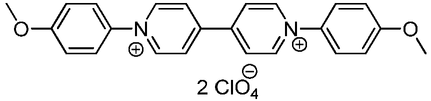 |
| I-18 | 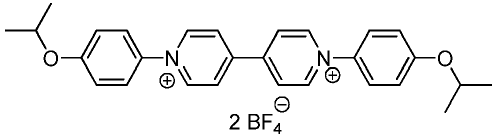 |
| I-19 | 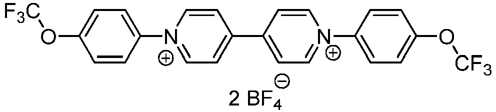 |
| I-20 | 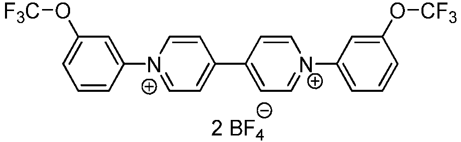 |
| I-21 | 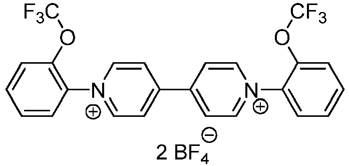 |
| I-22 | 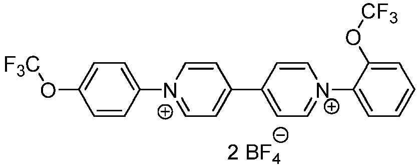 |
| I-23 | 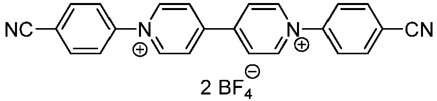 |
| I-24 | 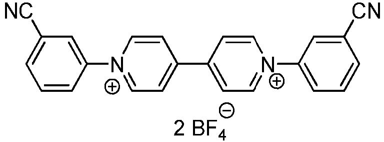 |
| I-26 | 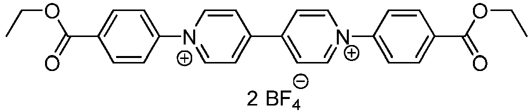 |
| I-27 | 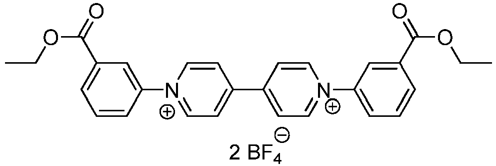 |
| I-28 | 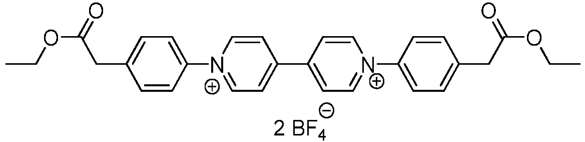 |
| I-29 | 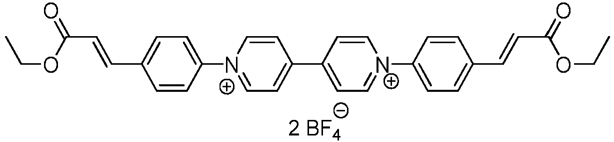 |
| I-30 | 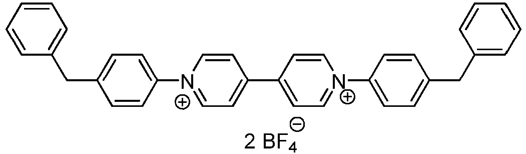 |
| I-31 | 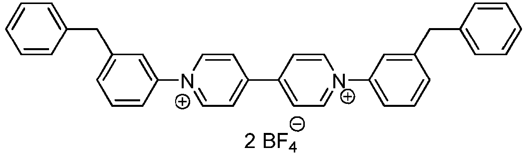 |
| I-32 | 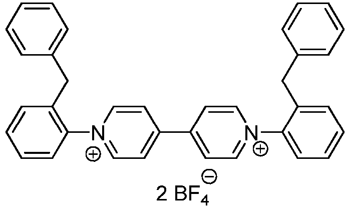 |
| I-34 | 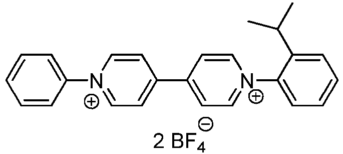 |
| I-35 | 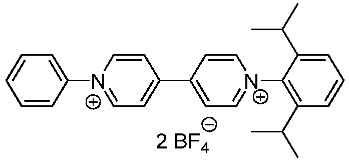 |
| I-36 | 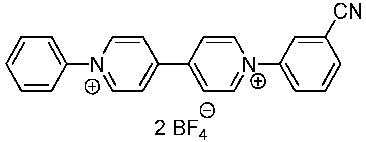 |
| I-37 | 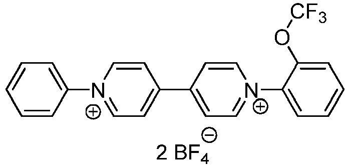 |
| I-38 | 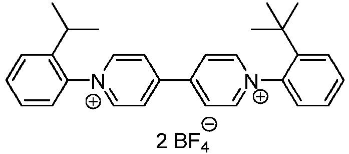 |
| I-39 | 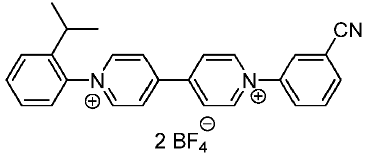 |
| I-40 | 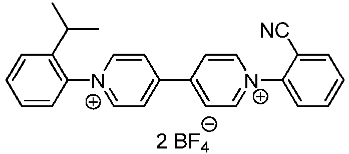 |
| I-41 | 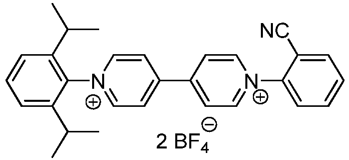 |
| I-42 | 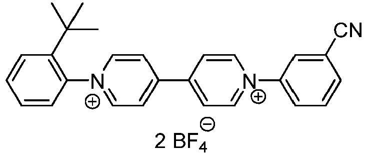 |
| I-43 | 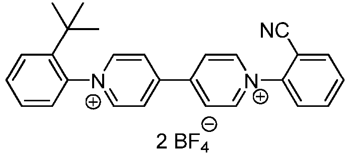 |
| I-44 | 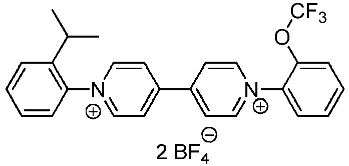 |
| I-48 | 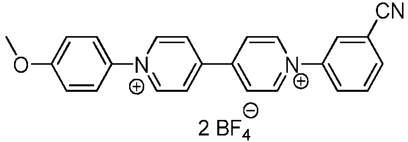 |
| I-49 | 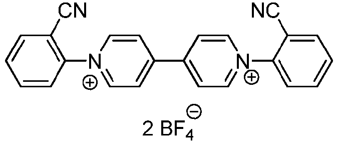 |
| I-50 | 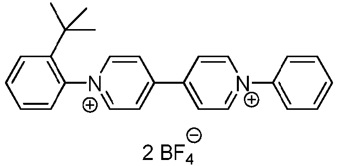 |
| II-1 | 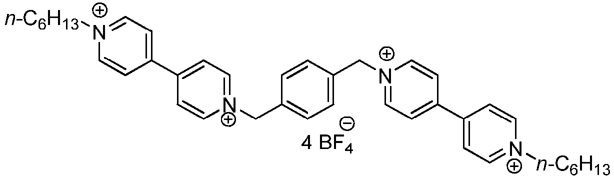 |
| II-2 | 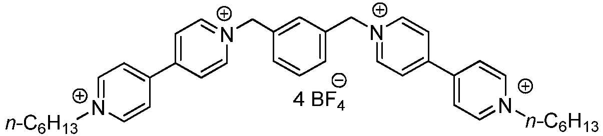 |
| II-3 | 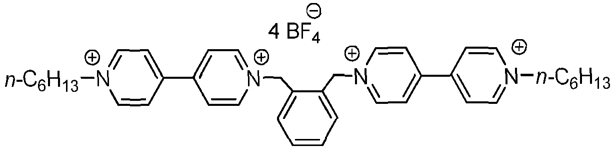 |
| II-4 | 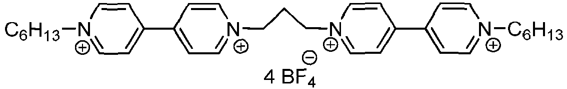 |
| II-5 | 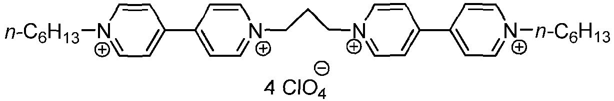 |
| II-6 | 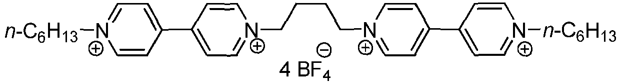 |
| II-7 | 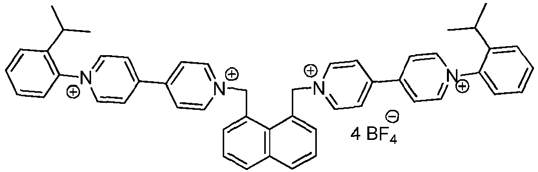 |
| II-8 | 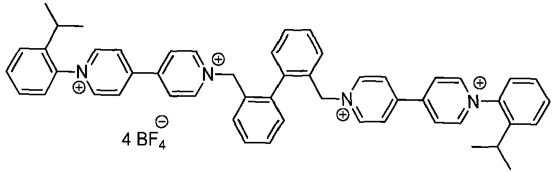 |
| II-9 | 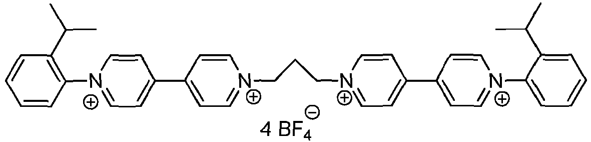 |
| II-10 | 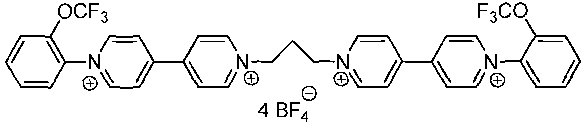 |
| II-11 | 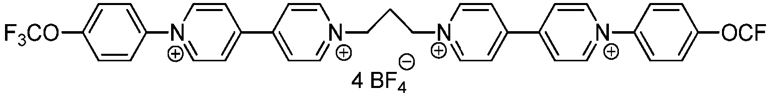 3 |
| II-12 | 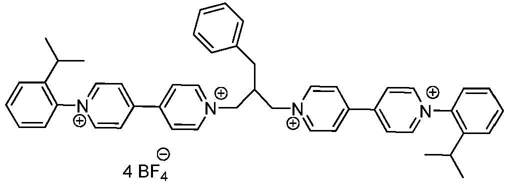 |
| II-13 | 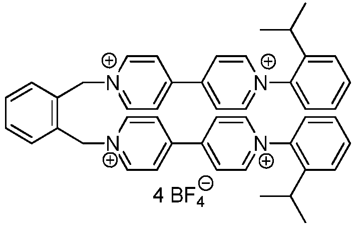 |
| II-14 | 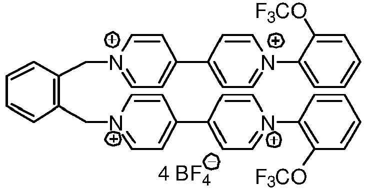 |
| II-15 | 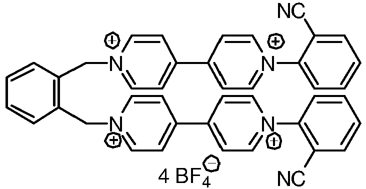 |

In one particularly preferred embodiment, the redox chemical mixture is constituted of:
- one reducing compound and
- at least one electrochromic oxidizing compound, preferably at least two electrochromic oxidizing compounds,
said at least one electrochromic oxidizing compound, being either a compound of formula la or a compound of formula IIa and said at least two electrochromic oxidizing compounds being chosen from the group consisting of compounds of formula la and compounds of formula Ila

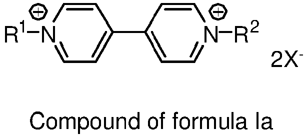

With R¹ and R² independently selected from:

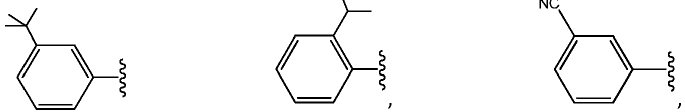

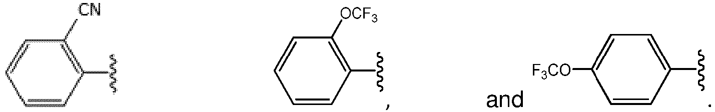

And X⁻ is a counterion selected from halide, tetrafluoroborate, tetraphenylborate, hexafluorophosphate, nitrate, methanesulfonate, trifluoromethane sulfonate, toluene sulfonate, hexachloroantimonate, bis(trifluoromethanesulfonyl)imide, perchlorate, acetate and sulfate. 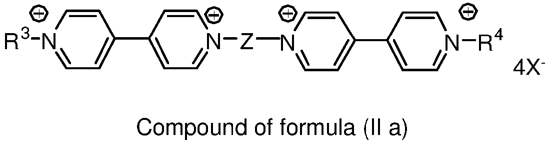
wherein Z is -CH₂-, -(CH₂)₂-, -(CH₂)₃-, -(CH₂)₄-, -(CH₂)₅-, -CH₂-CH(CH₃)-CH₂-, -CH₂-CH(CH₂Phenyl)-CH₂-, -(CH₂)₂-CH(CH₃)-CH₂-, -(CH₂)₃-CH(CH₃)-CH₂-, -(CH₂)₂-and CH(CH₃)-(CH₂)₂-,
and R³ and R⁴ are selected from alkyl and optionally substituted phenyl groups, preferably substituted phenyl groups independently selected from: 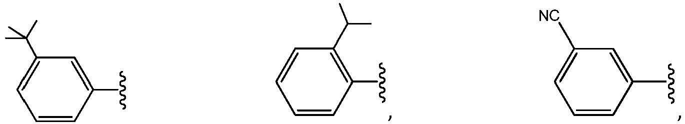 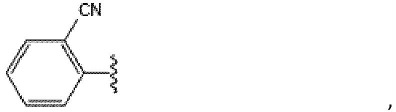 and

According to a preferred embodiment, the redox chemical mixture is chosen from the mixture constituted of 10-methylphenothiazine and of at least two electrochromic oxidizing compounds chosen from the group consisting of compounds of formula I-10 and II-10 and I-38 and II-10.

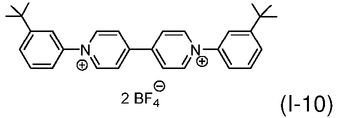

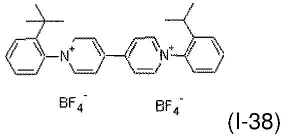

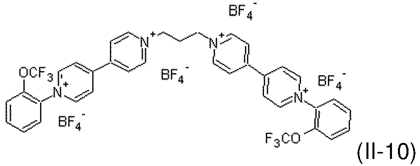

### Photochromic dyes

When the gel medium of the present invention is a photochromic gel medium, said gel further comprises at least one photochromic dye (or photochromic compound).

In principle, use may be made of any stable photochromic dye which is soluble in the non-aqueous solvent or solvents used in the gel medium described above. The choice will preferably be made of photochromic dyes exhibiting a large difference in transmission between the activated state and the inactivated state. The photochromic dyes are advantageously colorless in the nonactivated state.

As used herein, the term "dichroism" and similar terms, such as "dichroic", means the ability to absorb one of two orthogonal plane polarized components of radiation (including transmitted and/or reflected radiation) more strongly than the other orthogonal plane polarized component.

The photochromic dye may be selected from the group consisting of naphthopyrans, benzopyrans, phenanthropyrans, indenonaphthopyrans, spiro(indoline)naphthoxazines, spiro(indoline)pyridobenzoxazines, spiro(benzindoline)pyridobenzoxazines, spiro(benzindoline)naphthoxazines, spiro(indoline)-benzoxazines, fulgides, fulgimides, diarylethenes, and mixtures of such photochromic compounds.

The photochromic dye is preferably chosen from spirooxazines, spiroindoline[2,3']benzoxazines, chromenes, homoazaadamantane, azobenzene, spirofluorene-(2H)-benzopyrans, naphtho[2,1-b]pyrans and naphtho[1,2-b]pyrans and mixtures of such photochromic compounds.

Further examples of other photochromic compounds that can be used in curable photochromic adhesive compositions of the present invention include, but are not limited to, those disclosed at column 34, line 20 through column 35, line 13 of US 9,028,728 B2, which disclosure is specifically incorporated by reference herein.

### Dichroic compounds

The gel medium of the present invention may comprise dichroic dyes which do no show electrochromic or photochromic properties.

Examples of dichroic dyes include, but are not limited to, azomethines, indigoids, thioindigoids, merocyanines, indans, quinophthalonic dyes, perylenes, phthaloperines, triphenodioxazines, indoloquinoxalines, imidazo-triazines, tetrazines, azo and (poly)azo dyes, benzoquinones, naphthaquinones, anthraquinone and (poly)anthraquinones, anthrapyrimidinones, iodine, iodates, or combinations of two or more thereof.

### Fixed tint dyes

The gel medium of the present invention may also comprise dyes selected from passive dyes such as fixed-tint dyes alone or in addition to the photochromics dyes or electrochromic dyes.

As used herein, the term "fixed-tint dye" is equivalent to "fixed-colorant", "static colorant", "fixed dye", and "static dye", "permanent dyes". Such terms mean dyes that are non-photochromic materials or non-electrochromic materials which do not physically or chemically respond to electromagnetic radiation with regard to the visually observed color thereof. The term "fixed-tint dye" and related terms as used herein does not include and is distinguishable from the term photochromic compound, electrochromic mixture and related terms.

One or more fixed-tint dyes can be present in the gel medium in order to provide an end-article with at least a base (or first) color characteristic of the fixed-tint dye, when the photochromic compound or electrochromic compound is not activated; and optionally a second color characteristic of the combination of the fixed-tint dye and the photochromic compound or electrochromic compound when activated, such as by exposed to actinic radiation or leakage current.

The term "active" or "activated" when used in conjunction with a particular state or condition of the gel composition, referring to an active state or condition of the gel composition wherein the dyes, such as the photochromic or electrochomic dyes have been exposed to actinic radiation or leakage current. These terms are in opposition to the terms "inactive" or "inactivated" denoting an inactive state or condition of the gel composition wherein the dyes, such as the photochromic or electrochomic dyes are not exposed any longer to actinic radiation or leakage current

The optional fixed-tint dye includes at least one of azo dyes, anthraquinone dyes, xanthene dyes, azime dyes, iodine, iodide salts, polyazo dyes, stilbene dyes, pyrazolone dyes, triphenylmethane dyes, quinoline dyes, oxazine dyes, thiazine dyes, and polyene dyes.

The fixed-tint dye can be present in the gel medium in an amount of from 0.001 to 15 percent by weight, or from 0.01 to 10 percent by weight, or from 0.1 to 2.5 percent by weight, based on the total solids weight.

### Solvent:

As mentioned above the gel of the present invention is an organogel comprising a non-aqueous solvent, preferably said solvent being present in the said gel medium in at least 30 % by weight relative to the total weight of the gel, even more preferably in at least 50 % by weight relative to the total weight of the gel.

As used herein, the term "non-aqueous" solvent means that no water is specifically added to a formulation as described herein. The term "non-aqueous" do not exclude the presence of trace amounts of water present in the formulation, such as less than 10% by weight relative to the total weight of the gel medium, preferably less than 1% by weight relative to the total weight of the gel medium, and more preferably less than 0,5% by weight relative to the total weight of the gel medium.

The gel medium may contain trace amounts of water, such as less than 10% by weight relative to the total weight of the gel medium, preferably less than 1% by weight relative to the total weight of the gel medium, and more preferably less than 0,5% by weight relative to the total weight of the gel medium.

Preferably the gel medium is exempt from water. Suitable solvents are those which are chemically inert with regard to the other compounds of the gel medium according to the invention and with regard to the material forming the device hosting the said gel medium.

Furthermore, a suitable solvent is one in which the other compounds of the gel medium, except the crosslinked polymer, are soluble in. In particular, the non-aqueous solvent useful for the present invention is the liquid for solubilizing the dyes (in particular the electrochromic or photochromic dyes), while not solubilizing the crosslinked polymer.

The non-aqueous solvent of the gel medium of the present invention can be selected from an organic solvent or a solvent mixture and/or of at least one ionic liquid.

The non-aqueous solvent of the gel medium of the present invention, in particular when electrochromic dyes are present, can be selected from ethylene carbonate, propylene carbonate, butylene carbonate, 1,2-dimethyl ethylene carbonate, ethyl butyl carbonate; methyl butyl carbonate, dibutyl carbonate, diethyl carbonate, dimethyl carbonate, trifluoromethyl ethylene carbonate, vinylene carbonate, di-n-propyl carbonate, diisopropyl carbonate, methyl ethyl carbonate, ethyl propyl carbonate, ethyl isopropyl carbonate, methyl propyl carbonate, γ-butyrolactone, γ-valerolactone, acetronitrile, propionitrile, benzonitrile, glutaronitrile, methylglutaronitrile, dimethylformamide, N-methylpyrrolidone, sulfolane, 3-methyl sulfolane, methyl propionate, ethylene glycol, diethylene glycol dimethyl ether, triethylene glycol dimethyl ether, tetraethylene glycol dimethyl ether, 1,3-dioxolane, dimethyl sulfoxide, sulfolane, 4-methyl-1,3-butyrolactone, gamma-butyrolactone, methyl formate, ethyl formate, methyl acetate, ethyl acetate, methyl propionate, ethyl propionate, methyl butyrate, ethyl butyrate, propylene glycol diacetate, propylene glycol methyl ether diacetate, propylene glycol, propane sultone, ethylene sulfite, dimethoxyethane, diethoxyethane, tetrahydrofuran, 2-methyltetrahydrofuran, methyl ether acetate, methyl ethyl ketone, acetone, ethanol, tetrahydrofurfuryl alcohol, N-methyl pyrrolidone, 2-methoxyethyl ether, xylene, cyclohexane, 3-methylcyclohexanone, ethyl acetate, ethyl phenylacetate, ethyl methoxyphenyl acetate, propylene carbonate, diphenylmethane, diphenylpropane, tetrahydrofuran, methanol, methyl propionate, phthalate derivatives with high boiling point or low melting point, such phthalate derivatives being bis (2-ethylhexyl phthalate) (DEHP), diisononyl phthalate (DINP), di n-octyl phthalate (DNOP), diisodecyl phthalate (DIDP), dipropylheptyl phthalate (DPHP), di-2-ethylhexyl terephthalate (DOTP or DEHT), polyethylene glycol dibenzoate or polypropylene glycol dibenzoate with high boiling point or low melting point, halomethanes, dichloromethane; cyclic ethers, tetrahydrofuran and dioxane; alkyl acetates, ethyl acetate; alkyl lactates, ethyl lactate; alkylnitriles (or alkyl cyanides), acetonitrile (or methyl cyanide); dialkylformamides, dimethylformamide; dialkylsulfoxides, dimethylsulfoxide; ketones, acetone and methyl ethyl ketone; N-substituted cyclic amides (lactams), N-methyl-2-pyrrolidone and N-butyl-2-pyrrolidone; aromatic compounds, benzene, toluene, xylene, anisole, butyl benzoate, dialkyl benzenes, trialkyl benzenes, and mixtures thereof, preferably the solvent is propylene carbonate in particular when electrochromic dyes are present.

The solvent may also be a mixture of several acetate-based compounds, like propylene glycol acetate or propylene glycol methyl ether acetate. Such solvent or mixture of solvents are particularly useful for diluting carbodiimides.

Examples of solvents suitable for gels when photochromic dyes are present may be aprotic organic solvents: such as halomethanes, such as dichloromethane; cyclic ethers, such as tetrahydrofuran and dioxane; phthalate derivatives with high boiling point or low melting point, such phthalate derivatives being bis (2-ethylhexyl phthalate) (DEHP), diisononyl phthalate (DINP), di n-octyl phthalate (DNOP), diisodecyl phthalate (DIDP), dipropylheptyl phthalate (DPHP), di-2-ethylhexyl terephthalate (DOTP or DEHT); polyethylene glycol dibenzoate with high boiling point or low melting point; alkyl acetates, such as ethyl acetate; alkyl lactates, such as ethyl lactate; alkylnitriles (or alkyl cyanides), such as acetonitrile (or methyl cyanide); dialkylformamides, such as dimethylformamide; dialkylsulfoxides, such as dimethylsulfoxide; ketones, such as acetone and methyl ethyl ketone; N-substituted cyclic amides (lactams), such as N-methyl-2-pyrrolidone and N-butyl-2-pyrrolidone; aromatic compounds, such as toluene, xylene, anisole, butyl benzoate, dialkyl benzenes, trialkyl benzenes, AROMATIC 100 Fluid, which is a commercially available mixture of C9-C10 dialkyl- and trialkyl-benzenes, and AROMATIC 150 Fluid, which is a commercially available mixture of C9-C11 alkyl benzenes.

Preferably, the solvent may be a mixture of several phthalate-based compounds and/or acetate-based compounds.

In case a dichroic compound or a mixture of dichroic compounds is used, the solvent is preferably liquid crystal solvent (nematic or cholesteric).The organic solvents may be further selected from the group consisting of benzene, toluene, methyl ethyl ketone, acetone, ethanol, tetrahydrofurfuryl alcohol, N-methyl pyrrolidone, 2-methoxyethyl ether, xylene, cyclohexane, 3-methylcyclohexanone, ethyl acetate, ethyl phenylacetate, ethyl methoxyphenyl acetate, propylene carbonate, diphenylmethane, diphenylpropane, tetrahydrofuran, methanol, methyl propionate, ethylene glycol and mixtures thereof.

Ionic liquids can also be used in the present invention as solvent. Such ionic liquids are for instance those described in in document WO2009/115721 and are preferably chosen from 1-butyl-3-methylimidazolium bis(trifluoromethylsulfonyl)amide, 1-butyl-2,3-dimethylimidazolium bis(trifluoromethylsulfonyl)amide, N-butyl-N-methylpyrrolidinium bis(trifluoromethylsulfonyl)amide, 1-ethyl-3-methylimidazolium bis(trifluoromethylsulfonyl)amide, 1-hexyl-3-methylimidazolium bis(trifluoromethylsulfonyl)amide, 1-methyl-1-propylpiperidinium bis(trifluoromethylsulfonyl)amide, 1-octyl-3-methylimidazolium bis(trifluoromethylsulfonyl)amide, 2,3-dimethyl-1-propylimidazolium bis(trifluoromethylsulfonyl)amide, N-propyl-N-methylpyrrolidinium bis(trifluoromethylsulfonyl)amide, N,N,N-tributyl-N-methylammonium bis(trifluoromethylsulfonyl)amide, N,N,N-trimethyl-N-butylammonium bis(trifluoromethylsulfonyl)amide, N,N,N-trimethyl-N-hexylammonium bis(trifluoromethylsulfonyl)amide, N,N,N-trimethyl-N-propylammonium bis(trifluoromethylsulfonyl)amide, 1-phenylethyl-3-methylimidazolium bis(trifluoromethylsulfonyl)amide, (phenylethyl)-dimethylbenzylammonium bis(trifluoromethylsulfonyl)amide, ethyldimethylbenzylammonium bis(trifluoromethylsulfonyl)amide, 1-butyl-3-methylimidazolium tetrafluoroborate, 1-(2-hydroxyethyl)-3-methylimidazolium tetrafluoroborate, 1-ethyl-3-methylimidazolium tetrafluoroborate, N,N,N-trimethyl-N-butylammonium tetrafluoroborate, N,N,N-trimethyl-N-hexylammonium tetrafluoroborate, 1-ethyl-3-methylimidazolium tetrafluoroborate, 1-butyl-3-methylimidazolium acetate, bromide, chloride, dicyanamide, hexafluorophosphate, hydrogensulfate, methanesulfonate, tetrachloroaluminate and trifluoromethanesulfonate, 1-butyl-1-methylpyrrolidinium acetate, chloride, bromide, dicyanamide, hexafluorophosphate, hydrogensulfate and trifluoromethanesulfonate, 1-(2-hydroxyethyl)-3-methylimidazolium bromide, chloride, dicyanamide and hexafluorophosphate, 1-ethyl-3-methylimidazolium bromide, chloride, hexafluorophosphate, tetrachloroaluminate and trifluoromethanesulfonate, 1-hexyl-3-methylimidazolium hexafluorophosphate, 1-hexyl-3-methylimidazolium trifluoromethanesulfonate, or hydromethylimidazolium chloride or methanesulfonate.

Accordingly, said ionic liquids may be incorporated in the gel medium according to the invention under the form of "ionic solvent". This term here has a broader meaning than "ionic liquid" and encompasses any liquid having a melting point of less than 20°C and comprising, in total, at least 50% by weight, preferably at least 70% by weight, of one or more "ionic liquids" as defined above (organic salts having a melting point of less than 100°C).

Examples of solvents suitable for the gels according to the present invention adapted to be incorporated in batteries may be ethylene carbonate, propylene carbonate, butylene carbonate, 1,2-dimethyl ethylene carbonate, ethyl butyl carbonate; methyl butyl carbonate, dibutyl carbonate, diethyl carbonate, dimethyl carbonate, trifluoromethyl ethylene carbonate, di-n-propyl carbonate, diisopropyl carbonate, methyl ethyl carbonate, ethyl propyl carbonate, ethyl isopropyl carbonate, methyl propyl carbonate, dimethoxyethane, diethoxyethane, tetrahydrofuran, 2-methyltetrahydrofuran, diethylene glycol dimethyl ether, triethylene glycol dimethyl ether, tetraethylene glycol dimethyl ether, 1,3-dioxolane, dimethyl sulfoxide, sulfolane, 4-methyl-1,3-butyrolactone, gamma-butyrolactone, methyl formate, ethyl formate, methyl acetate, ethyl acetate, methyl propionate, ethyl propionate, methyl butyrate, ethyl butyrate, vinylene carbonate, propane sultone, ethylene sulfite.

### Electrolyte:

The composition of the invention may further comprise an inert current-carrying electrolyte. The inert current-carrying electrolyte should be compatible with the other components of the composition. In particular, the inert current-carrying electrolyte should not react with the electrochromic compounds.

Examples of inert current-carrying electrolyte include, but are not limited to, alkali metal salts, lithium, sodium or tetraalkylammonium salts, aluminium chloride and aluminium boride, persulfates and bis(fluorosulfonyl)imide. The inert current-carrying electrolyte is preferably selected from sodium, lithium and tetraalkylammonium ions in combination with inert anion selected preferably from chloride, tetrafluoroborate, hexafluoroborate and perchlorate.

Other examples of inert anions are, but are not limited to, tetraphenylborate, cyano-triphenylborate, tetramethoxyborate, tetrapropoxyborate, tetraphenoxyborate, perchlorate, chloride, nitrate, sulphate, phosphate, methanesulphonate, ethanesulphonate, tetradecanesulphonate, pentadecanesulphonate, trifluoromethanesulphonate, perfluorobutanesulphonate, perfluorooctanesulphonate, benzenesulphonate, chlorobenzenesulphonate, toluenesulphonate, butylbenzenesulphonate, tert-butylbenzenesulphonate, dodecylbenzenesulphonate, trifluoromethylbenzenesulphonate, hexafluorophosphate, hexafluoroarsenate or hexafluorosilicate. Most preferred inert current-carrying electrolyte is tetra-n-butylammonium tetrafluoroborate.

When present in the gel medium, the concentration of the inert current-carrying electrolyte is typically from 0.005 to 2 M, preferably from 0.01 to 1 M, more preferably from 0.05 to 0.5 M.

Suitable further additives for the electrochromic medium for the occasionally desired protection against UV light (<400 nm) are for example UV absorbers. Examples are 2,4-dihydroxybenzophenone (UVINUL^{®} 3000, BASF), 2-hydroxy-4-n-octyloxybenzophenone (SANDUVOR^{®} 3035, Clariant), 2-(2H-benzotriazol-2-yl)-6-dodecyl-4-methylphenol (Tinuvin^{®} 571, Ciba), 2,2'-dihydroxy-4-methoxy-benzophenone (Cyasorb 24^{™}, American Cyanamid Company), ethyl 2-cyano-3,3-diphenylacrylate (UVINUL^{®} 3035, BASF 2-ethylhexyl 2-cyano-3,3-diphenyl-acrylate (UVINUL^{®} 3039, BASF), 2-ethylhexyl p-methoxycinnamate (UVINUL^{®} 3088, BASF), 2-hydroxy-4-methoxy-benzophenone (CHIMASSORB^{®} 90, Ciba), dimethyl 4-methoxybenzylidenemalonate (SANDUVOR^{®} PR-25, Clariant).

The crosslinking reaction between the polyfunctional polymer and the crosslinking agent resulting in the self-supporting gel medium of the present invention takes place in the "reservoir" zone of the active device, particularly to the electrically controllable device or the electrochromic device.

This gel medium is particularly satisfactory for devices that may be large (such as glazing) which are used in a vertical position and in which the medium moves within the reservoir under its own weight, so that, if the two substrates are not sufficiently reinforced mechanically by a peripheral seal, there is a risk of an opening in the glazing due to the hydrostatic pressure that causes "bellying" of the glazing.

This gel medium is also particularly satisfactory for flexible and therefore deformable devices such as goggles. Such goggles may be used for activities such as for example skiing, or cycling or motorcycling.

The gel medium according to the invention advantageously has preferably a conductivity better than 10⁻⁵ S/cm.

Furthermore said gel preferably exhibits:
- absence of coloration,
- transparency, in particular to visible radiation,
- thermal and photochemical stability,
- chemical inertia with regard to the optional dyes and with regard to the material forming the wall of the active device, particularly to electrically controllable device or the electrochromic device.

### DEVICE:

According to another aspect, the invention concerns a device comprising the gel medium as defined in the first aspect, wherein said gel medium is formed by the following steps:
(a) forming a liquid composition by mixing outside of said device:
   - said at least one non-aqueous solvent;
   - said at least one optional dye, said optional dye being preferably selected from a photochromic dye, an electrochromic dye, a dichroic dye and a fixed tint dye, more preferably selected from a photochromic dye and an electrochromic dye;
   - said polyfunctional polymer containing at least two carboxyl moieties capable of undergoing crosslinking reactions, a molecular weight from 2,000 g/mol to 3,000,000 g/mol, preferably from 10,000 to 1,000,000 g/mol, more preferably from 25,000 g/mol to 400,000 g/mol and
   - said crosslinking agent chosen from a polycarbodiimide or a non-toxic polyaziridine;
(b) inserting the liquid composition of step (a) into said device and allowing to polymerize said polyfunctional polymer and said polycarbodiimide or polyaziridine thereby forming a crosslinked polymer and forming a gel medium in which the compounds and the solvent are held in a matrix comprising the crosslinked polymer.

After the mixing step, a degassing step can advantageously be performed to remove oxygen and water from the liquid composition.

All the characteristics described previously in connection with the gel medium of the invention also apply to the device.

Preferably, said polyfunctional polymer has an acid value from 1 to 50 mg KOH/g, preferably from 3 to 40 mg KOH/g, preferably from 4 to 15 mg KOH/g.

The polyaziridine is advantageously in the form of a non-aqueous composition comprising from 40 to 100% solid polyaziridine material relative to the total weight of the said composition.

A suitable non-toxic polyaziridine is NeoAdd^{™} PAX-521 by DSM and is supplied as an 80% solution in ethyl acetate. Another suitable polyaziridine is NeoAdd^{™} PAX-523 by DSM and is supplied as an 80% solution in methoxy propyl acetate.

The content of the polycarbodiimide or polyaziridine, respectively, is from 0,2 to 50 wt%, preferably from 0,5 to 15 wt%, more preferably from 1,0 to 10,0 wt%, % by weight relative to the total weight of polyfunctional polymer in the liquid composition.

The content of the polyfunctional polymer is from 2 to 60 wt%, preferably from 5 to 40 wt%, more preferably from 10 to 30 wt%, % by weight relative to the total weight of the liquid composition.

The device comprises a mechanism for holding the gel medium in a mechanically stable environment.

Said device is a battery or an electrochromic device or a photochromic device; preferably the device is an electrochromic device or a photochromic device and is selected from optical articles such as optical lenses, optical filters, attenuators, windows, visors, mirrors (such as rear-view mirrors) and displays, preferably optical lenses, more preferably ophthalmic lenses or optical lenses for goggles.

An electrochromic device comprises at least one transparent electrochromic cell comprising a pair of opposed substrates facing each other and forming a gap, and the gap is filled with the gel medium as defined here above.

More generally all the characteristics described above in connection with the gel medium also apply to the device, said device being another object of the present invention. Conversely, all the characteristics described below in connection with the device also apply to the gel medium.

Non-limiting examples of ophthalmic lens include corrective and non-corrective lenses, including single vision or multi-vision lenses (i.e afocal, unifocal, bifocal, trifocal and progressive lenses), which may be either segmented or non-segmented, as well as other elements used to correct, protect, or enhance vision, including without limitation contact lenses, intra-ocular lenses, magnifying lenses (such as lenses for contrast enhancement in augmented reality devices or virtual reality devices) and protective lenses (such as sun glasses or sun lenses) or visors. Non-limiting examples of display elements and devices include screens and monitors. Non-limiting examples of windows include automotive, marine and aircraft windows filters, attenuators, shutters, and optical switches. Non-limiting examples of mirrors are side-view mirrors, rear-view mirrors and other vehicle mirrors.

The device may contain functional layers such as polarizing layers, photochromic layer, anti-reflecting coatings, visible light and UV absorbing coatings, impact-resistant coatings, abrasion-resistant-coating, anti-smudge-coating, anti-fog coating, anti-dust coating, all of which are familiar to the skilled person.

The device of the invention may comprise a mechanism for holding the composition in a mechanically stable environment. For example, the electrochromic device of the invention comprises an electrochromic cell including two substrates facing each other. The substrates are preferably optical substrate such as any mineral or organic glass commonly known and used in the optical field. It may be sodocalcic or borosilicate mineral glass for instance. It may be a thermoplastic resin such as a thermoplastic polycarbonate (PC), PET, PEN, PMMA, COC, COP, PVDC, cellulose triacetate or a thermoset or photo-cured resin such as polyurethane, polyurethane/polyurea (such as TRIVEX^{®}) or polythiourethane. In case where the electrochromic device is used as an ophthalmic lens, the substrates used for manufacturing the cell may have a spherical shape or aspheric shape. The internal sides of the substrates may be coated with transparent conductive electrodes. The conductive electrodes are generally doped metal oxides with a formula comprising oxygen atoms and at least two other elements in various proportions and may be formed of a transparent conductive material such as transparent conductive oxides ("TCO"), for example indium tin oxide ("ITO"), fluorine-doped tin oxide ("FTO"), aluminium-doped zinc oxide ("AZO"), gallium-doped zinc oxide ("GZO"), indium-doped zinc oxide ("IZO"), aluminium gallium zinc oxide ("AGZO"), indium gallium zinc oxide ("IGZO"), antimony-doped tin oxide ("ATO"), aluminium tin zinc oxide ("ATZO"), Indium-tin-zinc-oxide ("ITZO"), or insulator-metal-insulator ("IMI"), such as indium tin oxide/silver/ indium tin oxide ("ITO/Ag/ITO") or metallic nanogrids, nanomeshes or nanowires based on copper, gold, silver or graphene and/or of organic conductive polymers (such as PEDOT or its derivatives (for example PEDOT:PSS), other polythiophenes, polyanilines, polypyrroles, polyacetylenes, or mixtures thereof) or may comprise nanoparticles chosen from metal nanoparticles, metal oxide nanoparticles, carbone nanotubes, graphene nanosheets, graphene oxide nanosheets, and mixtures thereof, preferably said metal oxide nanoparticles are chosen from ITO nanoparticles, SnO₂ nanoparticles, ZnO nanoparticles, AZO nanoparticles, WO₃ nanoparticles, or mixtures thereof or additives that can be chosen from surfactants, polyethylene glycol (PEG), ethylene glycol oligomers, ethylene glycol, DMSO, organic ionic liquids, or mixtures thereof. The substrates may be held at fixed distance from each other, for example with a spacer of 10 µm to 400 µm, preferably of 20 to 250 µm, and more preferably of 150 µm, in order to form a gap wherein the electrochromic composition is introduced.

As defined herein, nanomeshes are interconnected networks of nanowires. A nanowire is a nanostructure with ratio of the length to width of at least 10 and a width ranging from 1 to 100 nm. Thin metal layers typically need to have a thickness below 50 nm in order to have acceptable transmittance. Nanomeshes can be obtained by methods known in the art, including the deposition of a layer of a suspension of nanowires in a solvent and subsequent solvent removal, e.g. by drying. Nanogrids are usually made by photolithography technics.

The gel medium can be, for instance, injected into the devices in its liquid state by using either a vacuum backfilling process or a one-drop filling process. When vacuum backfilling process is used to inject the solution into the cell, it is preferable to make cells with only one hole.

Another device of the present invention comprises an optical component provided with at least one transparent cell arrangement juxtaposed in a parallel direction to the surface thereof, as disclosed in WO 2006/013250, each cell being tightly closed and containing said fluid, mesomorphous or gel host medium and said at least one compound of the present invention. Other devices according to the invention can be a device as described in FR 2937154 or FR 2950710 comprising at least one compound of the invention.

### USE

According to another aspect, the invention concerns the use of a mixture of:
- a polyfunctional polymer containing at least two carboxyl moieties capable of undergoing crosslinking reactions, a molecular weight from 10,000 g/mol to 3,000,000 g/mol, preferably from 30,000 to 1,000,000 g/mol, more preferably from 50,000 g/mol to 400,000 g/mol and
- a crosslinking agent chosen from a polycarbodiimide or a non-toxic polyaziridine for the preparation *in situ* of the gel medium serving as an electrolyte within a device in order to obtain a strong cohesive medium so that deformation of said medium is limited or strongly reduced upon deformation of said device.

The use of such mixture leads to the preparation *in situ* of a gel medium showing very good mechanical properties upon bending and high ionic conductivity within it.

Preferably, said polyfunctional polymer has an acid value from 1 to 50 mg KOH/g, preferably from 3 to 40 mg KOH/g, preferably from 4 to 15 mg KOH/g.

### EXAMPLE

This invention will be further illustrated by the following non-limiting example which are given for illustrative purposes only and should not restrict the scope of the appended claims.

The formulation is prepared as followed:
An electrochromic mixture (3,1%), a copolymer of vinyl acetate and crotonic acid sold as Vinnapas^{®} C501 from Wacker (19,4%) and propylene carbonate (77,5%) are blended together at room temperature until complete dissolution of all the components in the solvent.

The propylene carbonate, the electrochromic mixture formed of ethyl violologen diperchlorate and 10-methylphenothiazine are all sold by Sigma Aldrich.

The resulting viscous liquid is mixed with 2% of carbodiimide crosslinker the total weight of polyfunctional polymer in the liquid composition. The carbodiimide crosslinker is a highly viscous liquid. The obtained composition is used immediately to make an electrochromic device. After 1 hour at ambient temperature or a few minutes at 50°C the liquid has at least partially gelled, enough for it to be able to be move the so-obtained device without inducing optical defects. Thus, said device may be moved from the assembly machine to undergo a post curing step, in an oven for instance. The device is for example post cured at 50°C overnight.

The polycarbodiimide crosslinker used is sold under the commercial name Picassian^{®} XL725 by Stahl.

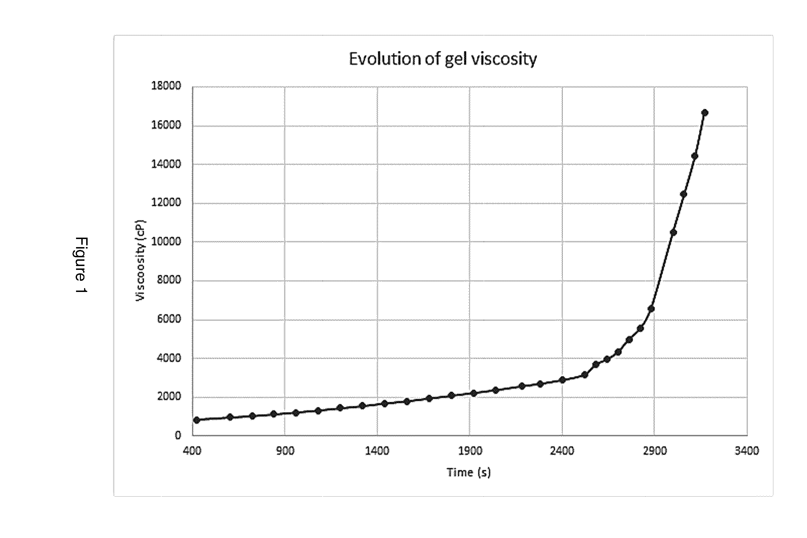

The curve illustrated in Figure1 shows the variation of the viscosity of the mixture as a function of time at room temperature.

After 24h the electrochromic device is bended and activated during 100h. No defects are visible. More precisely, the mechanical deformation does not affect the homogeneity of the coloration.

## Claims

1. Electrochromic gel medium comprising:
• at least one non-aqueous solvent, said solvent being present in the said gel medium in at least 30 % by weight relative to the total weight of the gel, even more preferably in at least 50 % by weight relative to the total weight of the gel;
• a crosslinked polymer resulting from the reaction of:
- a polyfunctional polymer containing at least two carboxyl moieties capable of undergoing crosslinking reactions, said polyfunctional polymer having a molecular weight from 2,000 g/mol to 3,000,000 g/mol, preferably from 10,000 to 1,000,000 g/mol, more preferably from 25,000 g/mol to 400,000 g/mol
- a crosslinking agent chosen from a polycarbodiimide or a non-toxic polyaziridine;
• a redox chemical mixture in solution in said solvent and interspersed in said crosslinked polymer, said mixture being constituted of at least one electrochromic reducing compound and at least one electrochromic oxidizing compound, and which is in an activated condition in the presence of an applied voltage and which bleaches to an inactive condition in the absence of an applied voltage.

2. The electrochromic gel medium according to claim 1, wherein the polyfunctional polymer is chosen from one containing at least two carboxyl moieties useful for the present invention can be chosen from a carboxylic acids functional polyester, a carboxylic acids functional polyether, a carboxylic acids functional polyurethane, a carboxylic acids functional polyacrylate, a carboxylic acids functional polymethacrylate, a carboxylic acids functional polyvinylacetate copolymer, copolymers made from ionic liquids, combinations thereof or a reaction products or copolymers thereof.

3. The electrochromic gel medium according to claim 1 or 2, wherein the polyfunctional polymer is :
a. a copolymer prepared from (meth)acrylic acid monomer or C₁-C₄ substituted (meth)acrylic acid monomer and
- at least one ethylenically unsaturated organic carboxylic monomer containing 3 to 9 carbon atoms and at least one carboxylic group, such as poly(acrylic acid-co-maleic acid), poly (acrylic acid-co-fumaric acid), poly(acrylic acid-co-crotonic acid) ; or
- at least one C₁-C₁₂ alkyl(meth)acrylate monomer such as poly(methyl methacrylate/methacrylic acid); or
- at least one ethylenically unsaturated C₁-C₁₂ alkene; or
- at least one aromatic mono-alkenyl monomer such as styrene;
b. a copolymer prepared from vinyl acetate monomer and at least one ethylenically unsaturated organic carboxylic monomer containing 3 to 9 carbon atoms and at least one carboxylic group, such as copolymer of vinyl acetate and fumaric acid, copolymer of vinyl acetate and crotonic acid, copolymer of vinyl acetate and maleic acid;
c. a copolymer prepared from C₁-C₁₂ alkyl vinyl ether monomer and at least one ethylenically unsaturated organic carboxylic monomer containing 3 to 9 carbon atoms and at least one carboxylic group, such as poly(methyl vinyl ether-alt-maleic acid°;
d. a carboxydifunctional PEG or PPG derivative, such as PEG-dipropionic acid, PEG-di-Succinic acid, PEG-di-Glutaric acid, PEG Bis[2-(succinylamino)ethyl];
e. a multiarm PEG or PPG carboxylic acid terminated derivative, such as 4-arm PEG-carboxylic acid with a pentaerythritol core; 4-arm PEG-dicarboxylic acid-diol with a pentaerythritol core; a PEG Dendrimer carboxylic acid terminated of formula : 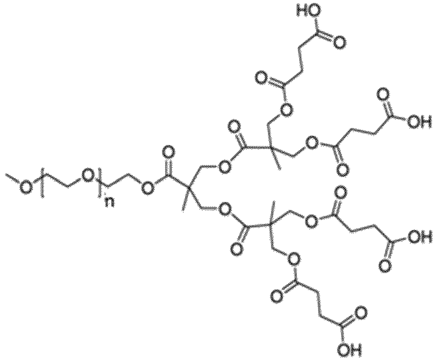 wherein n is an integer from 200-20000;
f. a poly(lactide-co-glycolide) (PLGA) carboxylic acid terminated derivative, such as Poly(D,L-lactide-co-glycolide) end-capped with acid groups (PLGA-diacid);
g. a multiarm PLGA carboxylic acid terminated derivative, such as 4-Arm PLGA-carboxylic acid with a pentaerythritol core;
h. a poly(ε-caprolactone)-PEG carboxylic acid terminated derivative,
i. a PLGA-PEG carboxylic acid terminated derivative;
j. a PLA-PEG carboxylic acid terminated derivative;
k. a PCL-PEG carboxylic acid terminated derivative;
l. a polyester dendrimer with 2,2-bis(hydroxymethyl)propanoic acid (bis-MPA), trimethylol propane or pentaerythritol as a core, such as: 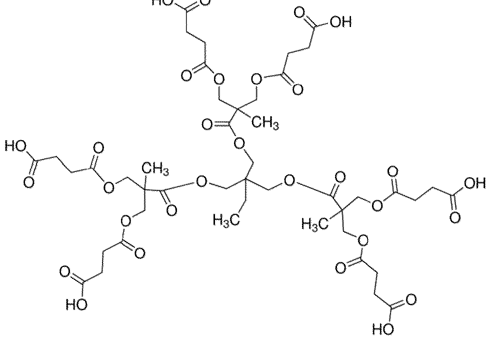
m. a polyurethane matrix which contains at least two carboxylic moieties, said polyurethane matrix being obtained from the reaction of polyols with alkylene oxides isocyanate compounds;
or a mixture or a reaction product thereof.

4. The electrochromic gel medium according to any one of claims 1 to 3, wherein the polycarbodiimide is chosen from an oligomeric material which comprises carbodiimide functions and hydrophilic segment groups having no reactivity towards the carbodiimide functions.

5. The electrochromic gel medium according to claim 4, wherein the oligomeric material which comprises carbodiimide functions is further substituted by at least an alkylalkoxysilane group or an alkoxysilane group; preferably it is further substituted by trimethoxysilanes or triethoxysilane.

6. The electrochromic gel medium according to any one of claims 1 to 5, wherein the electrochromic reducing compound is selected from ferrocene and their derivatives such as ethyl ferrocene, t-butyl ferrocene, phenoxazine and their derivatives, such as N-benzylphenoxazine, phenazine and their derivatives, such as 5,10-dihydrophenazine, N,N,N',N'-tetramethyl-p-phenylenediamine, phenothiazine and their derivatives, such as 10-methylphenothiazine and isopropylphenothiazine; thioanthrene; thiophene and tetrathiafulvalene.

7. The electrochromic gel medium according to any one of claims 1 to 6, wherein the electrochromic oxidizing compound is selected from mono viologens or bis viologens (i.e 4,4'-bipyridinium salts or bis[4,4'-bipyridinium] salts) such alkylviologens, arylviologens, arylalkylviologens, alkylarylviologens, anthraquinones, benzazoles, imidazo[1,2-α]pyridines, 2,1,3-benzothiadiazoles, imidazoles, benzoselenadiazoles, benzoselenazoles and derivatives thereof.

8. The electrochromic gel medium according to any one of claims 1 to 7, wherein the redox chemical mixture is constituted of one reducing compound and at least one electrochromic oxidizing compounds, said at least one electrochromic oxidizing compound being either a compound of formula (la) or a compound of formula (lla): 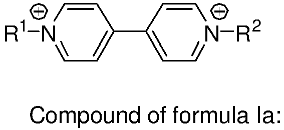
with R¹ and R² independently selected from: 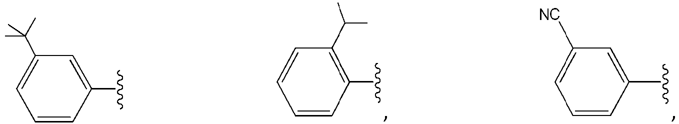 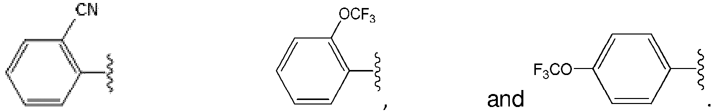
and X⁻ is a counterion selected from halide, tetrafluoroborate, tetraphenylborate, hexafluorophosphate, nitrate, methanesulfonate, trifluoromethane sulfonate, toluene sulfonate, hexachloroantimonate, bis(trifluoromethanesulfonyl)imide, perchlorate, acetate and sulfate. 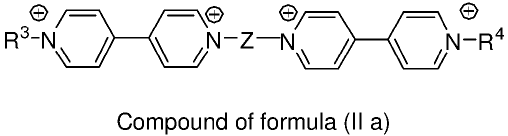
wherein Z is -CH₂-, -(CH₂)₂-, -(CH₂)₃-, -(CH₂)₄-, -(CH₂)₅-, -CH₂-CH(CH₃)-CH₂-, -CH₂-CH(CH₂Phenyl)-CH₂-, -(CH₂)₂-CH(CH₃)-CH₂-, -(CH₂)₃-CH(CH₃)-CH₂-, -(CH₂)₂-and CH(CH₃)-(CH₂)₂-,
and R³ and R⁴ are selected from alkyl and optionally substituted phenyl groups, preferably substituted phenyl groups independently selected from:

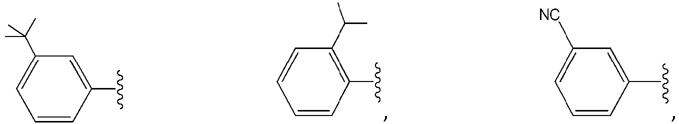

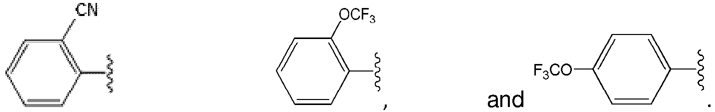

9. Electrochromic device comprising the electrochromic gel medium as defined in any one of claims 1 to 8, wherein said gel medium is formed by the following steps:
(a) forming a liquid composition by mixing outside of said device:
- said at least one non-aqueous solvent;
- said redox chemical mixture;
- said polyfunctional polymer containing at least two carboxyl moieties capable of undergoing crosslinking reactions, a molecular weight from 2,000 g/mol to 3,000,000 g/mol, preferably from 10,000 to 1,000,000 g/mol, more preferably from 25,000 g/mol to 400,000 g/mol and an acid value from 1 to 50 mg KOH/g, preferably from 3 to 40 mg KOH/g, preferably from 4 to 15 mg KOH/g and
- said crosslinking agent chosen from a polycarbodiimide or a non-toxic polyaziridine;
(b) inserting the liquid composition of step (a) into said device and allowing to polymerize said polyfunctional polymer and said polycarbodiimide or polyaziridine thereby forming a crosslinked polymer and forming a gel medium in which the compounds and the solvent are held in a matrix comprising the crosslinked polymer.

10. The device according to claim 9, wherein the content of the polycarbodiimide or polyaziridine, respectively, is from 0,2 to 30 wt%, preferably from 0,5 to 15 wt%, more preferably from 1,0 to 10,0 wt%, % by weight relative to the total weight of polyfunctional polymer in the liquid composition.

11. The device according to any one of claims 9 or 10, wherein the content of the polyfunctional polymer is from 2 to 60 wt%, preferably from 5 to 40 wt%, more preferably from 10 to 30 wt%, % by weight relative to the total weight of the liquid composition.

12. The device according to any one of claims 9 to 11, wherein said device is selected from optical articles such as optical lenses, optical filters, attenuators, windows, visors, mirrors (such as rearview mirrors) and displays, preferably optical lenses, more preferably ophthalmic lenses or optical lenses for goggles.

13. Use of a mixture of:
- a polyfunctional polymer containing at least two carboxyl moieties capable of undergoing crosslinking reactions, a molecular weight from 10,000 g/mol to 3,000,000 g/mol, preferably from 30,000 to 1,000,000 g/mol, more preferably from 50,000 g/mol to 400,000 g/mol and
- a crosslinking agent chosen from a polycarbodiimide or a non-toxic polyaziridine for the preparation *in situ* of the electrochromic gel medium serving as an electrolyte within an electrochromic device in order to obtain a cohesive medium so that deformation of said medium is limited or reduced upon deformation of said device.
